# FASCICULE DE BREVET EUROPEEN

(11) **EP 3 400 183 B1**
(45) Date de publication et mention de la délivrance du brevet: **11.09.2019**
(21) Numéro de dépôt: 17712181.1
(22) Date de dépôt: 09.01.2017
(51) Int. Cl.: B65D 85/68, B60P 3/08

(54) **PALETTE A DEUX NIVEAUX DE CHARGEMENT EMBOÎTABLES**
PALETTE MIT NESTBARER DOPPELSTÖCKIGER LADESTRUKTUR
PALLET HAVING NESTABLE TWO-LEVEL LOADING STRUCTURE

(30) Priorité: 07.01.2016 FR 1650103
(43) Date de publication de la demande: 14.11.2018
(73) Titulaire: Lohr Industrie, 67980 Hangenbieten (FR)
(72) Inventeur: ANDRE, Jean-Luc, 67120 Molsheim (FR); LEONHART, Pierre, 67400 Illkirch (FR)
(74) Mandataire: Merckling, Norbert
(86) Numéro de dépôt international: PCT/FR2017/050042
(87) Numéro de publication internationale: WO 2017/118829

(56) Documents cités:
- WO-A1-99/18308
- WO-A1-2015/040912
- CN-A- 102 120 520
- JP-A- 2014 148 310
- US-A- 5 213 458
- US-A- 5 890 855
- US-A1- 2007 189 872

## Description

### Domaine technique

La présente invention se rapporte au domaine technique du transport des véhicules automobiles dans des conteneurs ou des palettes de transport standardisés, notamment pour le transport par voie maritime, ferroviaire, routière et même aérienne.

Elle concerne plus particulièrement une palette déployable, à deux niveaux de chargement, dont la structure supérieure de chargement est emboîtable dans la structure inférieure de chargement en configuration repliée pour le transport d'un seul véhicule et déployable en position haute de hauteur et d'inclinaison variable pour le transport de deux véhicules automobiles au choix dans un conteneur de transport ou une palette aérienne.

### Etat de la technique

De nos jours, le transport des véhicules automobiles sur de longues distances est particulièrement fréquent, par exemple entre leur lieu de fabrication et leur lieu de vente qui se trouvent très souvent dans deux pays différents, voire deux continents différents.

Afin de réaliser ce transport de manière économique et sûre, l'utilisation de conteneurs de transport standardisés, également appelés conteneurs intermodaux, s'est particulièrement développée.

De tels conteneurs permettent en effet de transporter des marchandises fragiles telles que des véhicules automobiles de façon économique et protégée sur de longues distances, notamment par la mer ou sur terre, que ce soit par la route ou dans des trains de marchandises.

Afin de pouvoir transporter simultanément le plus de véhicules possible en optimisant l'espace disponible à l'intérieur d'un conteneur standardisé, on a développé dans l'art antérieur des palettes destinées à équiper ces conteneurs et à recevoir les véhicules automobiles à transporter.

De telles palettes, qui présentent généralement deux niveaux de chargement superposés, permettent ainsi avantageusement de transporter de façon sécurisée quatre véhicules automobiles simultanément au lieu de deux dans un conteneur standardisé de douze mètres de long (40 pieds).

Ces palettes permettent également de faciliter le chargement des véhicules. En effet, la largeur des conteneurs standardisés n'étant que légèrement supérieure à celle des véhicules à transporter, il est assez délicat de charger et de décharger les véhicules directement dans le conteneur sans risque de les endommager.

Avec ces palettes, on peut avantageusement charger les véhicules sur la palette alors qu'elle se trouve encore à l'extérieur du conteneur. Puis, une fois les véhicules solidement arrimés à la palette, on peut charger celle-ci à l'intérieur du conteneur au moyen d'un engin de manutention de type chariot élévateur à fourche.

Ces palettes sont généralement prévues repliables par abaissement de leur plan de chargement supérieur, afin de prendre moins de place lorsqu'elles ne sont pas utilisées, par exemple pendant leur stockage ou lorsqu'elles sont transportées à vide. Un tel abaissement du plan de chargement supérieur permet également de pouvoir charger plus facilement le véhicule destiné à être transporté sur celui-ci, ce plan de chargement n'étant monté en position de transport surélevée que dans un second temps.

Des exemples de telles palettes repliables à deux niveaux de chargement ont par exemple été divulgués dans les documents antérieurs suivants: US 5567111, US 4917557, US 5213458, WO 2015/040912 et WO 99/18308, US 5890855. L'état de la technique comprend également les documents antérieurs US 2007/0189872 et JP 2014-148310.

La présente invention fournit également une palette repliable à deux niveaux de chargement destinée à une application similaire. Cependant, la palette selon l'invention est constituée de moyens différents qui confèrent à celle-ci de nombreux avantages par rapport aux palettes divulguées dans l'art antérieur.

Le transport aérien des véhicules automobiles dans des avions cargos s'est également développé. En raison de contraintes dimensionnelles différentes imposées par ce mode de transport spécifique, les conteneurs standardisés évoqués ci-dessus pour le transport maritime, ferroviaire ou routier ne peuvent être transportés par avion et des conteneurs aériens ou palettes aériennes spécifiques ont dû être développés pour cette application.

Les palettes repliables de l'art antérieur, développées pour être compatibles avec les conteneurs standardisés maritimes ou terrestres, ne peuvent pas être utilisées sur ces palettes aériennes, car une fois déployées et chargées, elles ne présentent pas la forme et les dimensions adaptées pour celles-ci.

Grâce à sa configuration modifiable et adaptable, la palette selon l'invention peut au contraire être utilisée au choix dans un conteneur standard maritime ou terrestre, ou sur une palette aérienne. Ce changement de configuration est avantageusement réalisé par un simple réglage de la hauteur de la structure supérieure de chargement et de la disposition des véhicules transportés, qui est rapide et ne présente aucune difficulté.

La palette selon l'invention présente ainsi une très grande souplesse d'utilisation et peut avantageusement s'adapter, selon les souhaits de l'exploitant, aux différents modèles et dimensions des véhicules transportés, ainsi qu'aux différentes contraintes des modes de transport utilisés.

### Exposé de l'invention

L'invention fournit une palette selon la revendication 1. La palette est déployable, gerbable, non motorisée, à deux niveaux de chargement permettant le chargement d'un ou de deux véhicules automobiles en vue de leur transport dans un conteneur de transport par exemple standardisé.

Cette palette peut également être chargée sur une palette standard d'avion-cargo en vue d'un transport aérien.

Cette palette comprend :
- une structure porteuse inférieure et une structure porteuse supérieure, capables chacune de supporter un véhicule automobile, la structure porteuse supérieure étant prévue pour passer alternativement d'une position basse à une position haute dans laquelle elle est maintenue surélevée au-dessus de la structure porteuse inférieure.
- deux poteaux principaux et deux poteaux secondaires, qui sont fixés au niveau de leur extrémité inférieure, respectivement à l'arrière pour les poteaux principaux et à l'avant pour les poteaux secondaires de la structure porteuse inférieure, qui se trouvent alternativement en position couchée ou en position dressée, et qui portent la structure porteuse supérieure en position haute ;
- des organes de coulissement avant et arrière, qui permettent le coulissement de la structure porteuse supérieure le long des poteaux principaux et des poteaux secondaires pour passer de sa position basse à sa position haute et inversement.

Selon l'invention, la structure porteuse supérieure est une structure en cadre, sensiblement plane, qui comprend un dispositif supérieur support de roues avant et un dispositif supérieur support de roues arrière, discontinus l'un de l'autre et destinés à recevoir les roues d'un véhicule automobile en position de transport sur la structure porteuse supérieure, et qui délimite un espace central libre le plus grand possible.

La structure porteuse inférieure est une structure sensiblement plane qui comprend un ensemble inférieur support de roues, destiné à recevoir les roues d'un véhicule automobile en position de transport sur la structure porteuse inférieure.

En position basse, la structure porteuse supérieure est emboîtée dans la structure porteuse inférieure, ses dispositifs supérieurs support de roues avant et arrière s'insérant sur ou dans le prolongement de l'ensemble inférieur support de roues de la structure porteuse inférieure et formant ainsi avec cet ensemble inférieur support de roues tout ou partie d'un chemin de roulement bas, qui permet le chargement sur la structure porteuse supérieure d'un véhicule automobile jusqu'en position de transport, par son propre déplacement et sans rampe d'accès.

Selon une variante préférentielle de l'invention, la structure porteuse inférieure est un châssis ajouré comprenant, en plus de l'ensemble inférieur support de roue :
- deux longerons extérieurs et deux longerons intérieurs ; et
- un ensemble de traverses, dont au moins une traverse d'extrémité avant et une traverse d'extrémité arrière, qui réunissent lesdits longerons extérieurs et intérieurs.

Selon une variante préférentielle, la palette comporte en outre des moyens de retenue qui bloquent les organes de coulissement avant et arrière lorsque la position haute de la structure porteuse supérieure est atteinte, et qui sont susceptibles de bloquer les organes de coulissement avant et arrière à différentes hauteurs le long des poteaux principaux et des poteaux secondaires respectivement, afin de régler l'altitude de la position haute de la structure porteuse supérieure.

Selon une variante de l'invention, en position couchée, les poteaux principaux s'étendent transversalement par rapport à la direction générale de la palette.

Selon une variante de l'invention, en position dressée, les poteaux principaux sont inclinés latéralement vers l'extérieur ou sont sensiblement verticaux.

Selon une variante de l'invention, les poteaux secondaires sont fixés de manière articulée par leur extrémité inférieure à l'avant de la structure porteuse inférieure, et peuvent passer par pivotement de la position couchée à la position dressée.

Selon une variante de l'invention, en position dressée, les poteaux secondaires sont inclinés vers l'arrière de la palette.

Cependant, d'autres variantes sont envisageables, notamment une palette avec des poteaux principaux placés en position couchée longitudinale, et/ou avec des poteaux secondaires se trouvant en position dressée sensiblement verticale ou inclinée vers l'avant. De même, une version articulée des poteaux principaux peut également être envisagée, permettant un passage par pivotement de leur position couchée à leur position dressée.

Selon une variante préférentielle de l'invention, les poteaux secondaires sont fixés à la structure porteuse supérieure de manière à se redresser automatiquement lorsque l'avant de la structure porteuse supérieure est soulevé, leur inclinaison en position dressée dépendant de la hauteur à laquelle est soulevée l'avant de la structure porteuse supérieure.

Selon les variantes, l'ensemble inférieur support de roues peut être est un ensemble de quatre structures individuelles destinées à recevoir chacune l'une des roues du véhicule automobile transporté, ou un ensemble de deux structures transversales destinées à recevoir pour l'une les deux roues avant et pour l'autre les deux roues arrière du véhicule automobile transporté, ou un ensemble de deux structures longitudinales destinées à recevoir pour l'une les deux roues gauches et pour l'autre les deux roues droites du véhicule automobile transporté, ou encore une structure unitaire, par exemple périmétrique ou pleine, destinée à recevoir l'ensemble des quatre roues du véhicule à transporter.

Selon une variante préférentielle de l'invention, l'ensemble inférieur support de roues comporte en outre des rallonges, amovibles ou repliables ou escamotables, qui, en position déployée, constituent une prolongation du chemin de roulement bas.

Selon les variantes, le dispositif supérieur support de roues avant ou le dispositif supérieur support de roues arrière peuvent être un ensemble de deux structures individuelles destinées à recevoir chacune l'une des deux roues avant ou arrière du véhicule automobile transporté, ou une structure transversale destinées à recevoir les deux roues avant ou les deux roues arrière du véhicule automobile transporté.

Selon une variante de l'invention, le dispositif supérieur support de roues avant ou le dispositif supérieur support de roues arrière est déplaçable longitudinalement par rapport à la direction générale de la palette.

Selon une variante préférentielle de l'invention, la palette comporte des moyens de réception, aptes à coopérer avec la fourche d'un chariot élévateur à fourche, qui sont situés à l'avant et à l'arrière de la structure porteuse supérieure, et sur les côtés de la structure porteuse inférieure. Il s'agit par exemple d'ouvertures, d'emplacements d'appui sous tube ou poutrelles, de poches, de tunnels, de fourreaux, de cavités, d'anneaux ou d'anses préférentiellement articulées, repliables ou escamotables.

Selon les variantes de l'invention, la structure porteuse inférieure peut comporter en sous-face des roulettes, des rouleaux, des pièces de glissement, des longerons en forme de ski, des béquilles, ou des pieds à rouleaux ou à roulettes déployables sous la structure porteuse inférieure.

Selon les variantes de l'invention, la palette comporte en outre un ou plusieurs éléments de butée longitudinale, par exemple télescopiquse et/ou de longueur réglable.

Elle peut comporter également un élément d'ancrage, notamment un ou plusieurs poteaux intermédiaires supplémentaires par exemple télescopiques, ou un moyen de passage ou d'accrochage d'un câble ou d'une sangle de fixation de la palette au conteneur ou à la palette aérienne, situé sur la structure porteuse supérieure, sur les organes de coulissement, ou sur les poteaux principaux et les poteaux secondaires, ou encore sur un ou plusieurs poteaux intermédiaires supplémentaires.

Selon un mode de réalisation préférentiel de l'invention, lorsqu'elle est entièrement repliée, la palette est empilable sur d'autres palettes identiques et elle comporte des éléments saillants de centrage permettant le centrage automatique d'une palette identique empilée par-dessus.

L'invention enseigne également un procédé de chargement d'un ou de deux véhicules automobiles à l'intérieur d'un conteneur ou sur une palette de de transport aérien au moyen d'une palette selon l'invention.

Ce procédé comprend les étapes suivantes :
- poser la palette au sol, la structure porteuse supérieure étant emboîtée dans la structure porteuse inférieure ;
- charger un véhicule sur la structure porteuse supérieure en le faisant rouler sur le chemin de roulement jusqu'à ce que ses roues soient disposées sur le dispositif supérieur support de roues avant et le dispositif supérieur support de roues arrière de la structure porteuse supérieure ;
- immobiliser les roues de ce véhicule sur les dispositifs supérieurs support de roues avant et arrière correspondants ;
- pousser la palette chargée à l'aide d'un chariot élévateur à fourche jusqu'à l'intérieur du conteur ou sur la palette de transport aérien.

Ce procédé peut comprendre en outre l'étape suivante, effectuée avant ou après le chargement du véhicule sur la structure porteuse supérieure :
- placer les deux poteaux principaux en position dressée.

Ce procédé peut également comprendre, avant l'étape consistant à pousser la palette chargée à l'aide d'un chariot élévateur à fourche jusqu'à l'intérieur du conteur ou sur la palette de transport aérien, les étapes suivantes :
- soulever l'arrière de la structure porteuse supérieure à l'aide de la fourche d'un chariot élévateur à fourche, en faisant coulisser les organes de coulissement arrière le long des poteaux principaux ;
- verrouiller l'arrière de la structure porteuse supérieure en position haute ;
- soulever l'avant de la structure porteuse supérieure à l'aide de la fourche du chariot élévateur à fourche en faisant coulisser les organes de coulissement avant le long des poteaux secondaires et en provoquant ainsi le pivotement desdits poteaux secondaires articulés qui se redressent automatiquement lors du soulèvement de l'avant de la structure porteuse supérieure et passent d'une position couchée à une position dressée ;
- verrouiller l'avant de la structure porteuse supérieure en position haute ;
- charger un deuxième véhicule sur la structure porteuse inférieure, en le faisant rouler sur la structure porteuse inférieure jusqu'à ce que ses roues soient disposées sur l'ensemble inférieur support de roues ;
- immobiliser les roues du deuxième véhicule sur l'ensemble inférieur support de roues.

La palette déployable selon l'invention comporte de nombreuses différences et présente de nombreux avantages par rapport aux palettes décrites dans l'art antérieur.

En particulier, elle est modulable et adaptable, car une même palette peut être utilisée selon les besoins: en configuration repliée à plat pour le stockage, l'empilement et le rapatriement, en configuration repliée à plat ou partiellement dépliée lorsqu'un seul véhicule doit être chargé et transporté sur la palette, et en configuration entièrement déployée, lorsque deux véhicules doivent être chargés et transportés simultanément sur la même palette.

En outre, elle peut par un simple réglage être configurée pour pouvoir être chargée dans un conteneur standard ou sur une palette aérienne.

Avantageusement, la palette selon l'invention permet de charger un ou deux véhicules selon les besoins, le moyen de transport envisagé et la taille des véhicules automobiles à transporter. Ainsi lorsque de gros véhicules lourds ou hauts sont à transporter, notamment des 4x4 ou des monospaces, on peut ne charger qu'un seul véhicule par palette sur un seul niveau de chargement. Dans ce cas, le véhicule est chargé sur la structure porteuse supérieure, qui est laissée en position basse.

En outre, pour faciliter le chargement de tels véhicules larges, les poteaux principaux peuvent, dans certains modes de réalisation, être totalement enlevés de la palette pour laisser le passage entièrement libre, puis aisément remis en place et verrouillés en position dressée sensiblement verticale après ce chargement.

Alternativement, dans d'autres modes de réalisation, ces poteaux principaux peuvent avantageusement adopter une position dressée inclinée latéralement vers l'extérieur de la palette. Le passage disponible pour charger un véhicule sur la structure porteuse supérieure est ainsi plus large et les gros véhicules peuvent s'engager sans avoir à replier leurs rétroviseurs.

Lorsque deux véhicules automobiles doivent être chargés, les deux niveaux de chargement sont utilisés. La palette selon l'invention permet avantageusement un chargement à plat de ces deux véhicules sur les deux structures porteuses de la palette, sans qu'il soit nécessaire d'utiliser des agrès ou une rampe pour accéder à la structure porteuse supérieure. En effet, en position basse, la structure porteuse supérieure vient s'emboîter dans la structure porteuse inférieure et ne constitue donc pas ou peu de surépaisseur supplémentaire. Elle est ainsi directement franchissable sans rampe d'accès par un véhicule automobile classique même de faible garde au sol, qui peut rouler son propre déplacement jusqu'en position de transport.

Ce roulement est encore facilité par le fait que, lors de cet emboîtement, les dispositifs supérieurs support de roues avant et arrière de la structure porteuse supérieure viennent s'insérer sur ou dans le prolongement de l'ensemble inférieur support de roues de la structure porteuse inférieure, l'ensemble constituant ainsi un chemin de roulement, continu ou partiel, pour le véhicule.

De plus, grâce à cet emboîtement avantageux des deux structures porteuses, la palette repliée reste d'une hauteur très faible même sur ses bords latéraux. Du coup, elle ne gêne pas l'ouverture des portières latérales des véhicules automobiles transportés. Une fois le véhicule chargé sur la palette, le conducteur peut ainsi ouvrir sa portière pour sortir du véhicule, sans aucune gêne, ni risque d'endommagement.

La structure porteuse supérieure est avantageusement réalisée sous la forme d'un cadre, c'est-à-dire une structure périmétrique avec un espace central libre le plus grand possible. Une telle configuration permet de réaliser une meilleure imbrication de deux véhicules superposés sur les deux niveaux de chargement et de diminuer considérablement les jeux nécessaires. La hauteur globale de la palette chargée des deux véhicules peut ainsi être réduite.

En outre, cette configuration en cadre facilite également l'emboîtement des deux structures porteuses l'une dans l'autre à l'état repliée de la palette.

Les palettes selon l'invention sont de plus parfaitement empilables les unes sur les autres en configuration repliée, ce qui permet d'en stocker un grand nombre dans un espace limité et ainsi par exemple d'en empiler un grand nombre dans un même conteneur pour les renvoyer à leur point de départ une fois le transport des véhicules effectué, limitant ainsi les frais liés au voyage retour.

Par ailleurs, la palette selon l'invention comporte des poteaux principaux qui sont repliables de préférence transversalement par rapport à l'axe général de la palette.

Ces poteaux principaux sont de largeur importante et peuvent ainsi parfaitement supporter et reprendre l'ensemble des efforts longitudinaux de la palette chargée, en particulier les efforts de freinage lors de son transport.

Cette configuration de la palette est originale et avantageuse, car elle permet de se passer de contre-fiches latérales de renfort souvent rencontrées dans l'art antérieur.

Cependant, grâce à leur position couchée transversale, en configuration repliée de la palette, ces poteaux principaux ne représentent qu'une surépaisseur réduite malgré leur largeur importante et n'interfèrent pas avec les poteaux secondaires qui sont eux couchés et en position longitudinale.

En configuration repliée, la palette selon l'invention est ainsi quasiment plate et de hauteur relativement faible, tout en ayant des poteaux suffisamment larges et solides pour pouvoir reprendre d'une façon satisfaisante tous les efforts susceptibles de s'appliquer sur la palette chargée en configuration partiellement ou entièrement dépliée pendant son transport.

En outre, la palette selon l'invention permet avantageusement un réglage en hauteur de la structure porteuse supérieure. L'altitude de celle-ci peut être facilement adaptée en fonction du modèle des véhicules transportés et de leurs dimensions respectives. Elle peut également être adaptée en fonction de la taille du conteneur dans laquelle la palette doit être engagée.

La configuration de la palette chargée peut également être modifiée par un simple réglage, rapide à effectuer par l'opérateur, selon le mode de transport envisagé, afin de respecter la forme et les dimensions spécifiques imposées par un transport soit en conteneur, soit en palette avion, la palette selon l'invention étant ainsi universelle.

Toutes les opérations de manutention et de réglage de la palette, que ce soit pour la déployer ou la replier, la charger ou la décharger dans le conteneur, ou encore l'empiler ou la déplacer, se font à l'aide d'un simple engin de manutention de type chariot élévateur à fourche.

Un tel engin est extrêmement courant dans toutes les zones d'utilisation possible de ce type de palettes, notamment dans les aéroports, les zones portuaires, ferroviaires ou routières dédiées au transport de marchandises ou encore dans les zones de production, de stockage ou de vente des véhicules automobiles. Les infrastructures spécifiques et équipements de chargement couteux sont ainsi évités.

### Brève description des figures

D'autres caractéristiques et avantages de l'invention apparaitront à la lecture de la description détaillée qui va suivre, description faite en référence aux dessins annexés, dans lesquels :
- les figures 1 à 4 sont des vues en perspective d'un premier exemple de palette selon l'invention, respectivement de dessus en configuration repliée, partiellement dépliée, entièrement dépliée, et de dessous ;
- les figures 5 à 7 sont des agrandissements de détails qui illustrent la fixation sur la structure porteuse inférieure d'un poteau principal et le coulissement de l'organe de coulissement arrière le long de ce poteau principal ;
- la figure 8 est un agrandissement d'un détail illustrant la fixation articulée d'un poteau secondaire sur la structure porteuse inférieure et le coulissement de l'organe de coulissement avant le long de ce poteau secondaire ;
- les figures 9 et 10 sont des vues, respectivement de dessus en perspective et arrière en plan, qui montrent l'empilement l'une sur l'autre de deux palettes selon la figure 1 en configuration repliée ;
- les figures 11 à 12 sont des vue en perspective d'un deuxième exemple de palette selon l'invention, respectivement de dessus et de dessous en configuration entièrement dépliée ;
- la figure 13 est une vue d'un empilement de deux palettes selon la figure 11 en configuration repliée ;
- les figures 14 à 16 sont des vue en perspective d'un troisième exemple de palette selon l'invention, respectivement de dessus en configuration repliée, et de dessus et de dessous en configuration entièrement dépliée ;
- la figure 17 est une vue en perspective d'un quatrième exemple de palette selon l'invention de dessus en configuration entièrement dépliée ;
- la figure 18 est une vue de côté d'un cinquième exemple de palette selon l'invention en configuration partiellement dépliée ;
- la figure 19 est une vue schématique illustrant le chargement sur une palette avion ou dans un conteneur standard d'une même palette selon l'invention configurée différemment ;
- la figure 20 est une vue schématique illustrant l'accès facile d'un véhicule à la structure porteuse supérieure ;
- la figure 21 est une vue schématique illustrant la faible hauteur totale des deux structures porteuses emboîtées qui ne gênent pas l'ouverture des portières latérales ;
- les figures 22 à 30 sont des vues de profil schématiques qui illustrent les différentes étapes successives d'une séquence de chargement de deux véhicules automobiles sur la palette de la figure 11 puis de l'engagement de cette palette à l'intérieur d'un conteneur de transport ;
- les figures 31 à 36 sont des vues de profil schématiques qui illustrent les étapes d'une séquence d'engagement dans un conteneur de transport d'une palette selon la figure 1 chargée de deux véhicules automobiles ;
- la figure 37 est une vue de côté d'un sixième exemple de palette selon l'invention, arrimée dans un conteneur au moyen d'un poteau intermédiaire supplémentaire ;
- la figure 38 est une vue schématique illustrant le chargement d'une palette selon l'invention dans un avion cargo.

### Exposé détaillé de l'invention

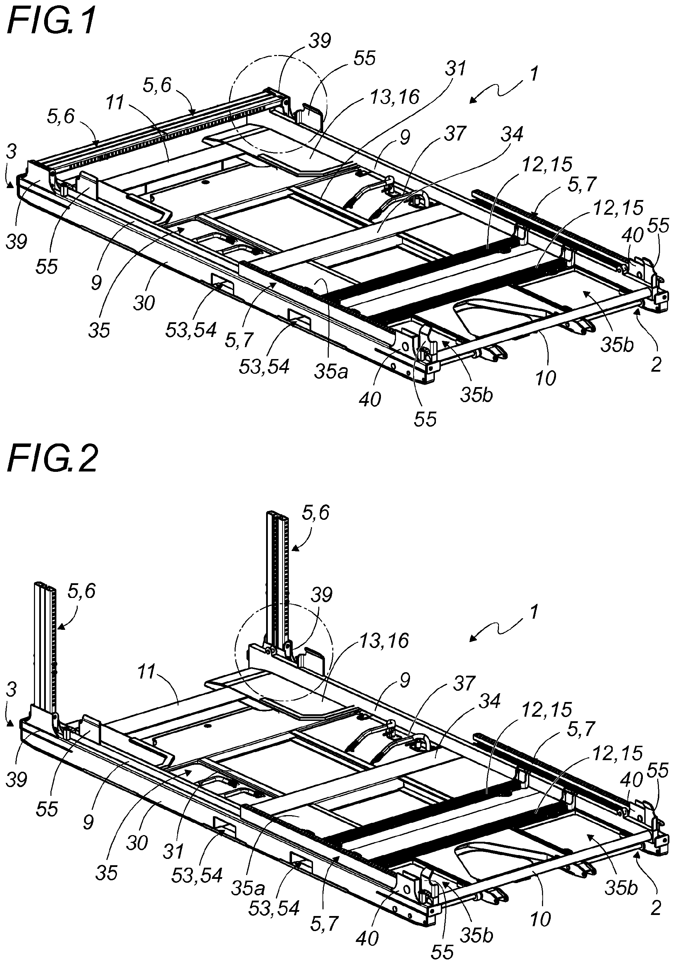

Des exemples de la palette selon la présente invention vont maintenant être décrits de façon détaillée en référence aux figures 1 à 38. Les éléments équivalents représentés sur les différentes figures porteront les mêmes références numériques.

Par convention, dans cette demande de brevet, on définira les notions d'avant et d'arrière en fonction du sens de chargement sur les différentes figures du véhicule se trouvant sur la structure porteuse supérieure de la palette, le côté avant étant ainsi celui où sont situés les poteaux secondaires et le côté arrière celui où sont situés les poteaux principaux de la palette. Bien entendu, lorsque la palette sera utilisée, ce véhicule pourra être chargé en sens inverse si on le souhaite.

De même, on définira les notions de longitudinal et de transversal par rapport à la direction générale (direction principale) de la palette.

Enfin, on définira l'emboîtement d'une pièce dans une autre comme étant l'engagement total ou au moins partiel de cette pièce dans l'autre, de sorte que la hauteur totale des deux pièces emboîtées est inférieure à la somme des hauteurs de chacune de ces pièces prises isolément. Ainsi, lorsque la structure porteuse supérieure 2 est emboitée dans la structure porteuse inférieure 3, elle n'est pas simplement posée à plat sur celle-ci mais pénètre au moins partiellement dans celle-ci, l'épaisseur globale de la structure résultante étant inférieure à la somme des épaisseurs des structures porteuses supérieure 2 et inférieure 3 isolées.

Sur les différentes figures, on a représenté plusieurs exemples de palette 1 selon l'invention.

Cette palette 1 comprend une structure porteuse supérieure 2 et une structure porteuse inférieure 3 qui constituent deux plans de chargement superposés pour des véhicules 4 de type automobile. Ces deux structures porteuses 2, 3 sont reliées l'une à l'autre par un ensemble de quatre poteaux 5, dont deux poteaux principaux 6 à l'arrière et deux poteaux secondaires 7 à l'avant de la palette 1. Ces poteaux 5 sont situés à proximité des quatre coins extérieurs de la palette 1, de façon à apporter une bonne stabilité sans gêner l'ouverture des portes des véhicules transportés.

Afin de faciliter l'imbrication des véhicules 4 transportés l'un au-dessus de l'autre, la structure porteuse supérieure 2 est réalisée sous la forme d'un cadre, c'est-à-dire une structure périmétrique, qui délimite un espace central 8 vide, le plus grand possible.

Cette structure porteuse supérieure 2 comprend ainsi deux longerons longitudinaux 9 réunis dans leur zone d'extrémité par une traverse d'extrémité avant 10 et une traverse d'extrémité arrière 11. La structure porteuse supérieure 2 comporte en outre un dispositif supérieur support de roues avant 12 et un dispositif supérieur support de roue arrière 13 qui sont fixés au minimum sur les longerons longitudinaux 9 et éventuellement encore sur les traverses d'extrémités arrière 11 et/ou avant 10, et qui sont destinés à recevoir et à supporter chacun les roues 14 de l'un des trains de roues, respectivement avant et arrière, du véhicule 4 chargé sur la structure porteuse supérieure 2.

Ces deux dispositifs supérieurs support de roues avant 12 et arrière 13 sont discontinus, c'est-à-dire indépendants l'un de l'autre, afin de ne pas encombrer l'espace central 8.

Selon les variantes, chacun de ces dispositifs supérieurs support de roues avant ou arrière peut être un ensemble de deux structures individuelles prévues pour recevoir uniquement une roue 14 avant ou arrière du véhicule 4 transporté, ou une structure duale prévue pour recevoir les deux roues 14 avant ou les deux roues 14 arrière du véhicule automobile 4 transporté. Dans ce deuxième cas de figure, il s'agit d'une structure transversale.

Selon les modes de réalisation, ces dispositifs peuvent prendre plusieurs formes.

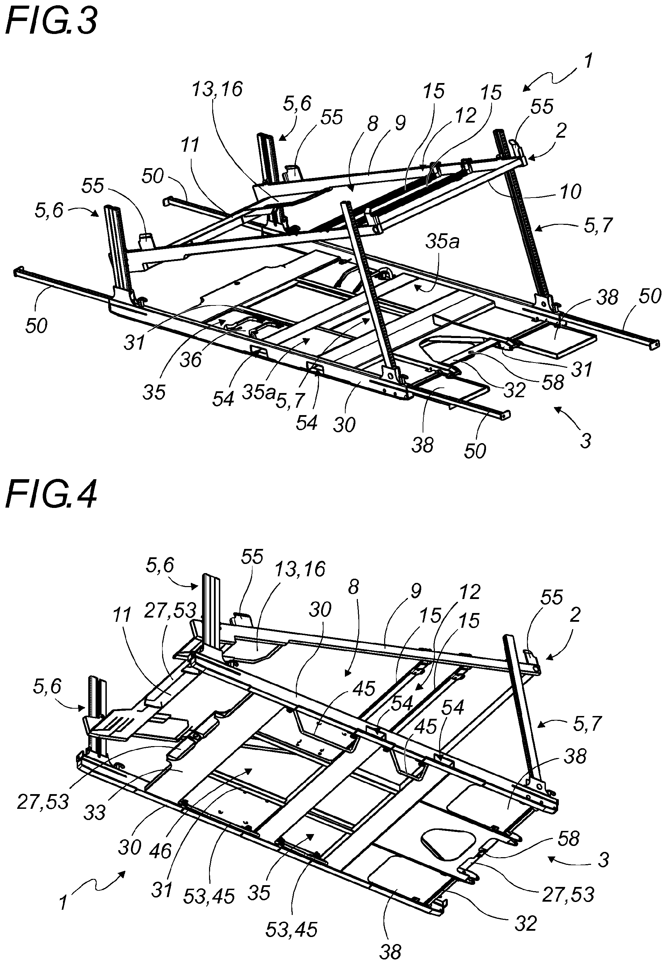

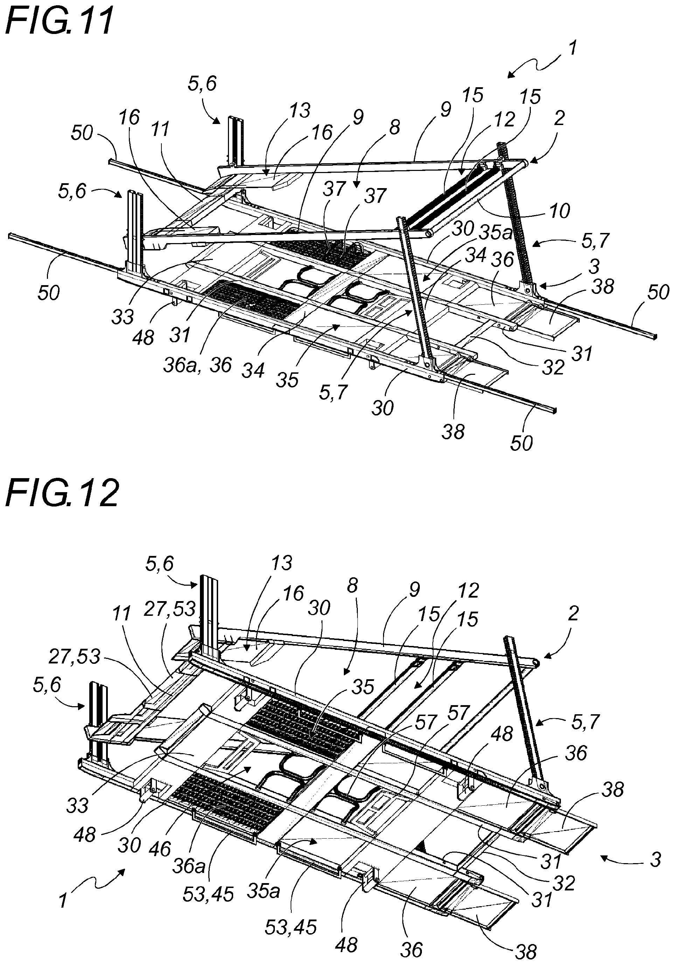

Il peut s'agir par exemple, comme sur les variantes des figures 3 et 11, de deux tubes transversaux 15, de préférence sensiblement cylindriques, qui délimitent entre eux une niche dans laquelle les roues 14 concernées du véhicule 4 transporté s'enfoncent légèrement. Le calage de la voiture est ainsi réalisé. En outre, l'avant de la voiture 4 est légèrement abaissé lorsqu'elle est chargée sur la structure porteuse supérieure 2 en position haute, ce qui permet de diminuer de quelques centimètres la hauteur totale de la palette à l'état chargé.

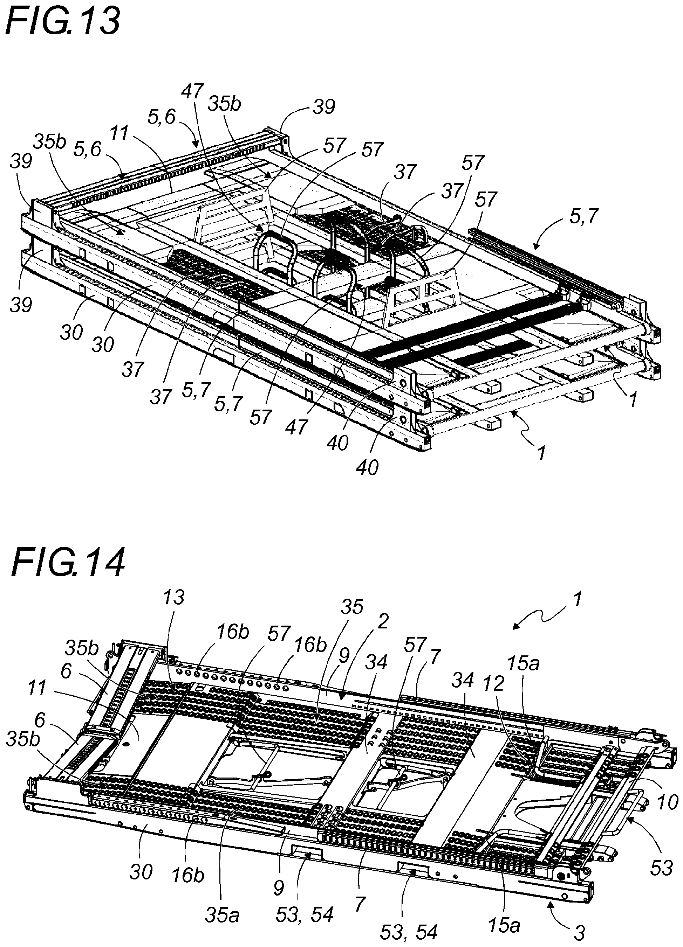

Il peut s'agir alternativement d'une tubulure recourbée 15a de manière à délimiter une niche de réception comme illustré sur les figures 14 à 16, ou encore d'un platelage.

Le dispositif supérieur support de roues arrière 13 comprend de préférence au moins un platelage 16 fixé à la traverse d'extrémité arrière 11 et/ou aux longerons longitudinaux 9, par exemple un platelage unique s'étendant sur toute la largeur de la structure porteuse supérieure 2, ou deux platelages individuels, par exemple sensiblement rectangulaires.

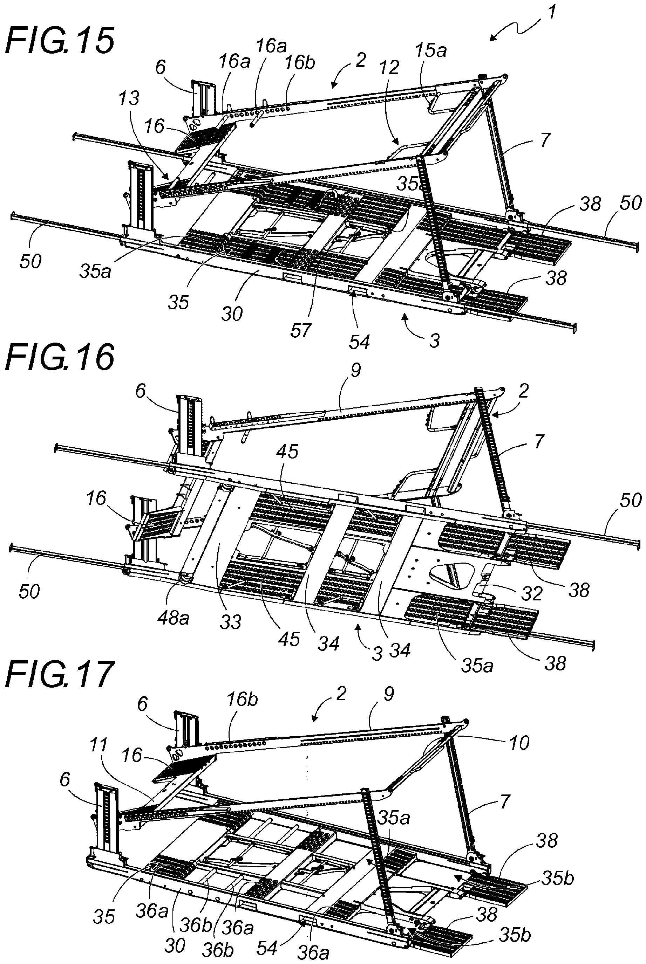

Comme représenté sur les figures 15 et 16, ce platelage 16 peut être complété ou remplacé par deux tiges 16a montées dans des trous 16b des longerons longitudinaux 9 et s'étendant en porte-à-faux vers l'intérieur du cadre. Ces tiges 16a délimitent également entre elles une niche de réception pour les roues 14 du véhicule.

Avantageusement, si plusieurs trous 16b sont prévus comme représenté, les tiges 16a peuvent être déplacées afin de pouvoir s'adapter aux différents diamètres de roue 14 ou encore aux différents écartements entre les trains de roue pouvant être rencontrés selon les modèles de véhicules 4.

De même, le dispositif supérieur support de roues avant 12 peut être prévu déplaçable par translation longitudinale, c'est-à-dire par coulissement le long des deux longerons longitudinaux 9 afin de pouvoir régler leur position relative par rapport au dispositif supérieur support de roues arrière 13. Et, l'écartement entre les deux tubes transversaux 15 peut être réglé afin de convenir aux différents diamètres de roues 4 possibles. Une fois ces réglages effectués, les dispositifs supérieurs support de roues sont verrouillés aux longerons longitudinaux 9.

Bien que non représentées sur les figures, des cales de roue ou sangles adaptées pour assurer la fixation des roues 14 du véhicule 4 transporté peuvent avantageusement être prévues près des dispositifs supérieurs support de roues avant 12 et arrière 13. Ces cales ou sangles peuvent être amovibles ou directement intégrées à ces dispositifs ou à tout autre zone de la structure porteuse supérieure 2 où elles seraient accessibles par l'opérateur et non gênantes.

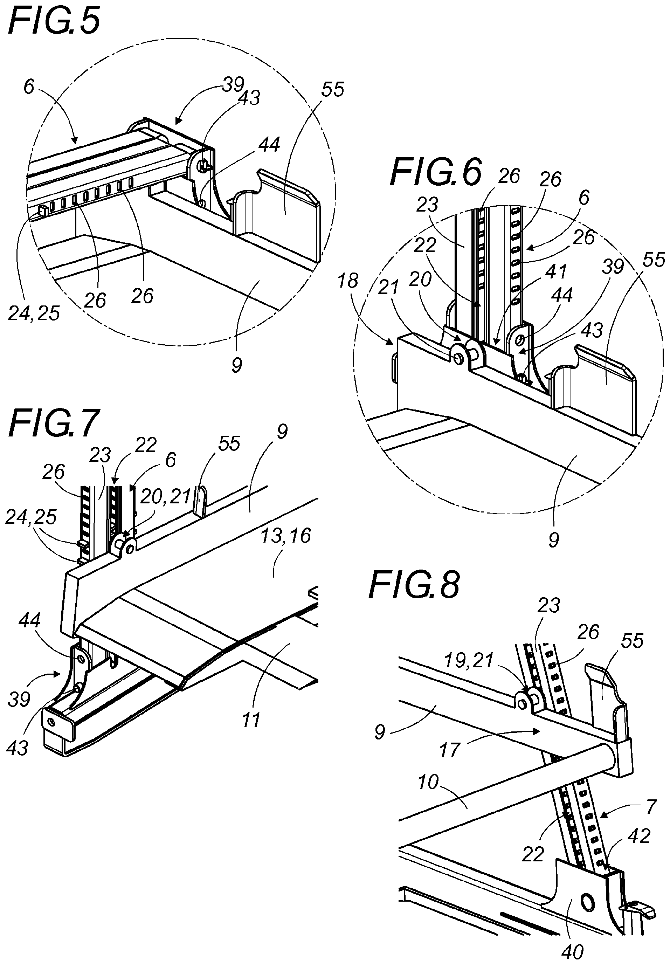

A proximité des coins de la structure porteuse supérieure 2, c'est-à-dire dans la zone d'extrémité avant 17 et la zone d'extrémité arrière 18 des longerons longitudinaux 9, la structure porteuse supérieure 2 comporte en outre des organes de coulissement saillants, respectivement deux organes de coulissement avant 19 et deux organes de coulissement arrière 20, qui s'étendent transversalement aux longerons longitudinaux 9 et se prolongent vers l'extérieur de la structure porteuse supérieure 2. Ces organes de coulissement avant 19 et arrière 20, plus visibles sur les agrandissements des figures 6 à 8, sont par exemple des tiges 21 sensiblement cylindriques.

Comme on le verra ci-après, ces organes de coulissement arrière 20 et avant 19 coulissent respectivement le long des poteaux principaux 6 et des poteaux secondaires 7 lorsque la structure porteuse supérieure 2 passe de sa position basse à sa position haute et inversement.

Dans les modes de réalisation représentés, les poteaux principaux 6 et secondaires 7 comportent chacun pour cela une rainure 22 qui débouche sur leur face intérieure 23 et s'étend sur toute leur longueur. Les dimensions de ces rainures 22 sont adaptées pour que les tiges 21 puissent y être engagées et coulisser librement à l'intérieur de celles-ci. Ces tiges 21 sont préférentiellement prolongées par un épaulement s'étendant dans la rainure 22 à l'intérieur du poteau correspondant, qui s'oppose à l'échappement de la tige 21 hors de la rainure 22 lors de ce coulissement.

La palette 1 comporte également des moyens de retenue 24 qui permettent de bloquer ces organes de coulissement avant 19 et arrière 20 lorsqu'ils ont atteint une certaine hauteur sur les poteaux secondaires 7 et principaux 6 respectivement.

Les moyens de retenue 24 représentés sont des broches 25 qui coopèrent avec un ensemble d'ouvertures de réception 26 complémentaires, ménagées dans les poteaux principaux 6 et les poteaux secondaires 7.

Deux broches 25 sont engagées transversalement à la rainure 22 dans les ouvertures de réception 26, l'une au-dessous et l'autre au-dessus de chacune des tiges 21 ayant atteint sa position haute. Les tiges 21 sont ainsi bloquées et verrouillées en position haute dans les deux sens, c'est-à-dire à la fois vers le haut et vers le bas.

Sur les variantes préférentielles représentées, il existe une multitude d'ouvertures de réception 26 sur toute la longueur des poteaux principaux 6 et des poteaux secondaires 7. Il est donc possible de bloquer les organes de coulissement avant 19 et arrière 20 à différentes hauteurs tout le long de ces poteaux, et ainsi de de régler la hauteur de la structure porteuse supérieure 2 à une altitude choisie.

Par ailleurs, des emplacements tels que 27 peuvent être prévus au niveau des traverses d'extrémité arrière 11 et avant 10, de forme adaptée pour la mise en place d'une fourche 28 d'un chariot élévateur 29 à fourche, servant moyens de réception 53 pour cette fourche 28 facilitant la saisie de ces traverses par ce chariot élévateur 29.

D'autres moyens de moyens de réception 53 peuvent être envisagés alternativement, tels que par exemple des ouvertures, des emplacements d'appui sous tube, des poches, des fourreaux, des tunnels, des cavités, des anneaux ou des anses éventuellement articulées, repliables ou escamotables.

La structure porteuse inférieure 3 des palettes 1 représentées est également une structure sensiblement plane qui comprend deux longerons extérieurs 30 et deux longerons intérieurs 31. L'ensemble de ces longerons est réuni par une traverse d'extrémité avant 32, une traverse d'extrémité arrière 33 et deux traverses intermédiaires 34.

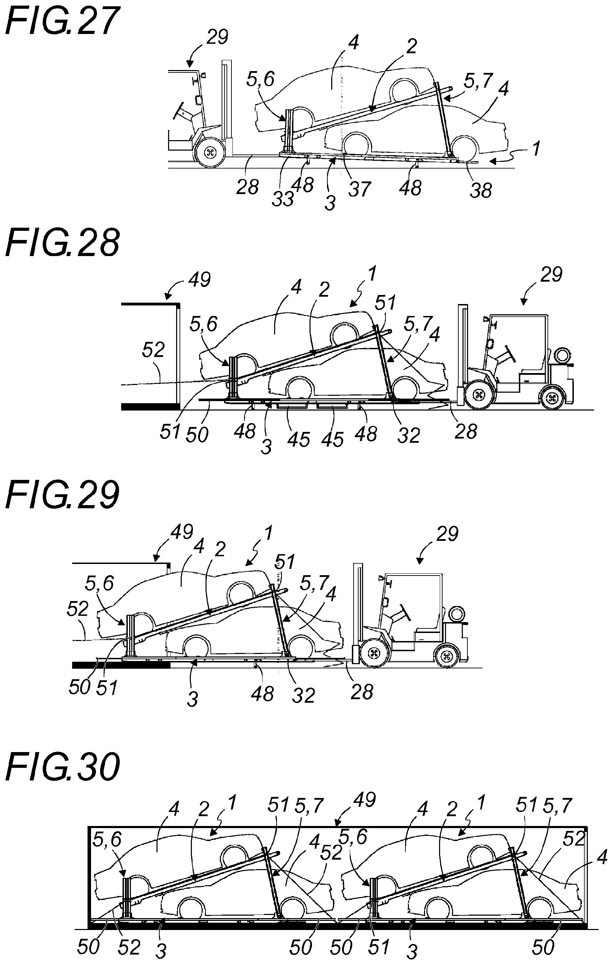

De préférence, la sous-face de ces longerons extérieurs 30 et/ou intérieurs 31 peut être réalisée sous forme de ski afin d'améliorer le glissement de la palette 1 notamment sur le plancher d'un conteneur. Alternativement ou en plus, et pour la même raison, la sous-face de la structure porteuse inférieure 3 peut être pourvue de pièces de glissement recouvrant par exemple ces longerons, et/ou de roulettes ou de rouleaux 48a, préférentiellement disposés sous la traverse d'extrémité arrière 33 et/ou la traverse d'extrémité avant 32 et directement intégrés dans ces traverses (voir figure 16) ou montés par exemple sur des béquilles déployables (voir figures 27, 28).

La structure porteuse inférieure 3 comporte un ensemble inférieur support de roues 35. Comme déjà indiqué, cet ensemble 35 peut prendre différentes formes.

Sur les exemples représentés sur les figures 1 à 16, il s'agit de deux bandes de roulement 35a s'étendant longitudinalement de chaque côté de la structure porteuse inférieure 3, entre un longeron extérieur 30 et le longeron intérieur 31 correspondant.

Ces bandes de roulement 35 servent de support de roues pour les roues 14 droites ou gauches du véhicule automobile 4 chargé sur la structure porteuse inférieure 3 et forme une partie d'un chemin de roulement 35b bas facilitant le chargement des véhicules 4.

Les bandes de roulement 35 peuvent comporter des zones abaissées 36, préférentiellement équipées de platelage, qui forment des niches de réception et de calage pour les roues 14 du véhicule 4.

A la place de ces bandes de roulements 35 continues, l'ensemble inférieur support de roues 35 peut également être formé de plusieurs zones de platelages 36a distinctes et discontinues, par exemple situées uniquement au niveau des traverses 33 et 34 comme sur l'exemple de la figure 17.

Dans ce cas, le chemin de roulement 35b n'est plus continu et le véhicule 4 doit rouler alternativement sur les zones de platelage 36a et sur le sol lors de son chargement.

Sur cet exemple, des tiges 36b ont été rajoutées entre les longerons extérieurs 30 et les longerons intérieurs 31 dans une zone ne comportant pas de platelage 36, afin de rigidifier de l'ensemble. Ces tiges 36b peuvent également servir de support de roues et délimiter entre elles une niche de réception pour les roues 14 du véhicule.

Comme pour la structure porteuse supérieure 2, l'ensemble inférieur support de roues 35 est préférentiellement équipés de cales de roue 37 ou de sangles de fixation, amovibles ou intégrées, et adaptées à la fixation des roues 14 du véhicule 4 transporté.

Avantageusement, la structure porteuse inférieure 3 peut comporter également des rallonges 38, amovibles, repliables ou escamotables, qui, en position déployée constituent, comme représenté sur les figures 3, 11, 15 ou 17, une prolongation de l'ensemble inférieur support de roues 35 de la structure porteuse inférieure 3. De telles rallonges 38 permettent de s'adapter facilement aux différents gabarits de véhicules 4 pouvant être rencontrés, en permettant de rallonger si besoin la structure porteuse inférieure 3 pour transporter les véhicules les plus longs.

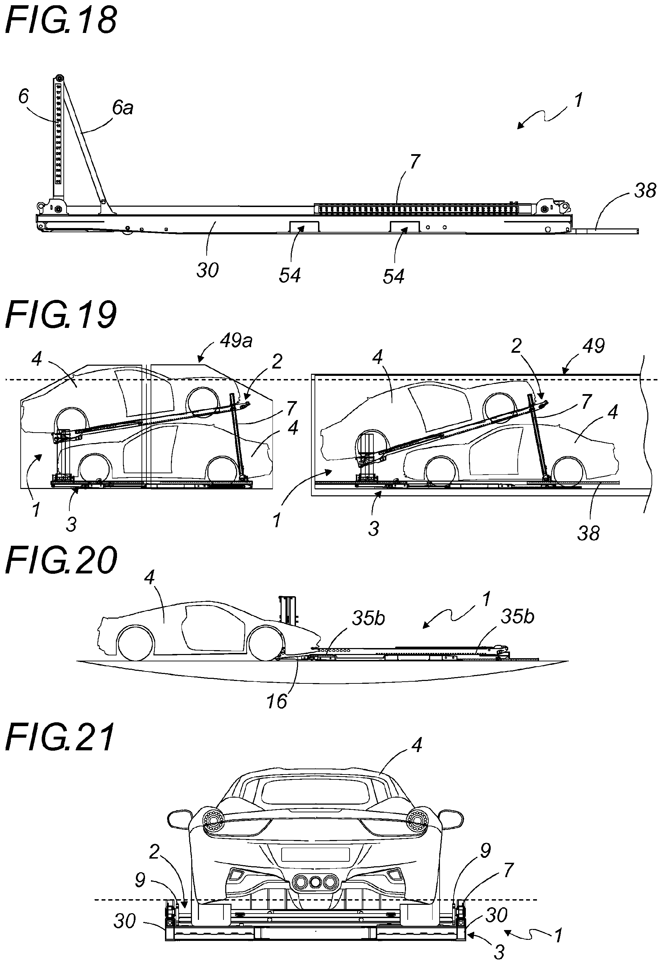

Avantageusement, ces rallonges 38 permettent également de décaler vers l'avant le véhicule transporté sur la structure porteuse inférieure 3 afin de pouvoir abaisser plus la structure porteuse supérieure 3. La palette 1 chargée adopte ainsi une configuration plus longue et moins haute, parfaitement adaptée au transport par conteneur comme représenté sur la figure 19.

Par comparaison, le gabarit devant être respecté pour un transport sur une palette avion est plus haut et plus court, comme également représenté sur la figure 19. Pour s'y adapter, il suffit alors de ne pas utiliser les rallonges 38, qui sont repliées ou enlevées, et de charger le véhicule inférieur en l'engageant plus vers l'arrière de la structure porteuse inférieure 3. Pour cela, la structure porteuse supérieure 3 doit être plus soulevée. La palette 1 chargée adopte alors une configuration plus haute et plus courte, adaptée au transport aérien.

La structure porteuse inférieure 3 comporte au niveau de ses coins deux logements de réception arrière 39 et deux logements de réception avant 40, dans lesquels sont engagées et fixées respectivement les extrémités inférieures 41 des poteaux principaux 6 et les extrémités inférieures 42 des poteaux secondaires 7.

Les logements de réception arrière 39 sont préférentiellement réalisés sous la forme de berceaux ouverts sur leurs faces supérieure et intérieure, dans lesquels les extrémités inférieures 41 des poteaux principaux 6 sont retenues de manière fixe et non articulée, par exemple au moyen d'une broche 43 traversant des ouvertures 44 du logement de réception arrière 39.

Les poteaux principaux 6 peuvent être montées dans ces logements de réception arrière 39, alternativement dans plusieurs positions différentes : en position couchée transversale illustrée sur la figure 5 et correspondant à la configuration repliée de la palette 1, ou, en position dressée verticale illustrée sur les figures 6 et 7 et correspondant aux configurations partiellement et entièrement dépliées de la palette 1. Pour passer d'une position à l'autre, la broche 43 doit être retirée, puis remise en place dans des ouvertures 44 différentes du logement de réception arrière 39, après basculement du poteau principal 6 concerné.

Afin de faciliter le chargement d'un véhicule sur la structure porteuse supérieure 2 de la palette 1 en configuration partiellement dépliée, ces poteaux principaux 6 peuvent également être placés en position dressée légèrement inclinée latéralement vers l'extérieur de la palette.

Pour cela, les broches 43 sont laissées dans les ouvertures 44 les plus hautes du logement de réception arrière 39, et les poteaux principaux 6 sont simplement basculés vers le haut par pivotement autour de ces broches 43. Comme leurs extrémités inférieures 41 sont peu engagées dans les logements de réception arrière 39, le pivotement des poteaux principaux 6 peut se poursuivre au-delà de la position verticale, jusqu'à une position dressée inclinée latéralement vers l'extérieur de la palette dans laquelle les poteaux principaux 6 sont en appui contre le bord supérieur de la paroi extérieure du logement de réception arrière 39.

Le passage libéré pour le chargement du véhicule 4 est ainsi plus large, ce qui permet d'y engager plus facilement les gros véhicules, et par exemple sans avoir besoin de rabattre leurs rétroviseurs.

Afin de libérer complètement le passage pour le chargement du véhicule 4 sur la structure porteuse supérieure 2, les poteaux principaux 6 peuvent alternativement être complètement enlevés de la palette 1 après retrait des broches 43.

Dans ce cas, la structure porteuse supérieure 2 reste avantageusement centrée latéralement, du fait de l'emboîtement de ses longerons longitudinaux 9 entre les longerons extérieurs 30 la structure porteuse inférieure 3, et longitudinalement du fait de l'engagement des tiges 21 dans des encoches prévues à cet effet dans la paroi intérieure du logement de réception arrière 39. Il est ainsi aisé de remettre en place les poteaux principaux 6 après le chargement du véhicule 4.

Dans les deux cas (poteaux principaux inclinés ou complètement déposés), une fois le véhicule chargé, les poteaux principaux 6 sont ensuite placés en position dressée sensiblement verticale, emboîtés au fond des logements de réception arrière 39 et verrouillés par les broches 43 placées dans les ouvertures 44 les plus basses du logement de réception arrière 39. Les logements de réception avant 40 sont, eux, préférentiellement ouverts sur leurs faces supérieure et arrière, de manière à pouvoir recevoir les extrémités inférieures 42 des poteaux secondaires 7 qui y sont fixées de manière articulée, de façon à pouvoir passer par pivotement d'une position couchée longitudinale sur les longerons extérieurs 30, illustrée sur les figures 1 et 2 et correspondant aux configurations repliée et partiellement dépliée de la palette 1, à une position dressée inclinée vers l'arrière, illustrée sur la figure 8 et correspondant à la configuration entièrement dépliée de la palette 1.

Comme précédemment, des moyens de réception 53 pour la fourche 28 d'un chariot élévateur 29 à fourche sont préférentiellement prévus au niveau des longerons extérieurs 30 ou des traverses d'extrémité avant 32 et/ou arrière 33 pour faciliter la manutention de la palette 1.

Ces moyens de réception 53 peuvent adopter différentes formes, notamment des ouvertures, des poches, des tunnels ou des cavités ménagés dans ces longerons ou ces traverses.

Des emplacements 27 sont par exemple prévus au niveau des traverses d'extrémité arrière 33 et avant 32.

Sur les exemples de palette 1 représentés sur les figures 1 à 10 et 15 à 18, des poches 54 transversales ont été prévues dans les longerons extérieurs 30 afin de pouvoir y engager la fourche 28 d'un chariot élévateur 29 placé transversalement à la palette 1.

Ces poches 54 sont préférentiellement réalisées au niveau des traverses intermédiaires 34 qui sont avantageusement prévues creuses afin de constituer un tunnel de réception pour la fourche 28.

En plus de ces poches 54, des anses 45, articulées et repliables ou escamotables peuvent également être prévues sous les longerons extérieurs 30. Ces anses 45 se déploient vers le bas et permettent au chariot élévateur 29 de manipuler la palette 1 lorsque l'emplacement du centre de gravité de la palette chargée ne permet pas d'utiliser les poches 54.

Avantageusement, ces anses 45 peuvent se déployer automatiquement par gravité, lorsque l'on soulève la palette 1 comme on le verra par la suite. En outre, ces anses 45 présentent de préférence une forme sensiblement trapézoïdale et une inclinaison oblique à l'état déployé, qui favorisent leur rabattement automatique sous la structure porteuse inférieure 3 lorsque l'on charge la palette 1 dans un conteneur de transport.

Des moyens de réception 53 différents ont été prévus sur la variante de palette 1 représentée sur les figures 11 à 13.

Dans cette réalisation, aucune poche n'a été prévue dans les longerons ou les traverses afin de ne pas les fragiliser, ni d'être obligé d'augmenter leur épaisseur. Les moyens de réception 53 sont uniquement réalisés sous la forme d'anneaux ou de anses 45 articulées, repliables ou escamotables, et déployables sous la structure porteuse inférieure 3.

Un autre type de anses 57 articulées et repliables ou escamotables peut également être prévu au niveau des longerons intérieurs 31 et/ou des traverses intermédiaires 34 et de la traverse d'extrémité arrière 33 afin de faciliter la manutention par un chariot élévateur 29 à fourche de la palette 1 en configuration repliée.

Comme représenté, lorsqu'elles sont repliées, ces anses 57 ne dépassent pas de la structure porteuse inférieure 3 et s'étendent à plat dans l'espace central vide 46 situé entre les longerons intérieurs 31. Mais lorsqu'elles sont relevées, elles dépassent cette fois au-dessus la structure porteuse inférieure 3 et de l'ensemble de la palette 1 à l'état repliée, et peuvent aisément être saisie par la fourche 28 d'un chariot élévateur 29.

Si à la fois les traverses 33, 34 et les longerons intérieurs 31 en sont pourvus, le chariot élévateur 29 peut avantageusement saisir la palette 1 transversalement ou longitudinalement selon les besoins.

Comme plus particulièrement représenté sur la figure 13, les anses 57 des longerons intérieurs 31 sont préférentiellement disposées en vis-à-vis dans l'espace central vide 46 et sont de préférence convergentes l'une vers l'autre au niveau de leur partie supérieure 47.

Lorsque l'on empile les palettes 1 les unes sur les autres, ces anses 57 peuvent ainsi, grâce à leur partie supérieure 47 convergente, remplir avantageusement une fonction de centrage automatique de la palette 1 identique empilée par-dessus. L'opération d'empilement peut donc être réalisée facilement par un unique opérateur aux commandes d'un chariot élévateur 29, sans que l'aide d'un opérateur supplémentaire au sol ne soit nécessaire.

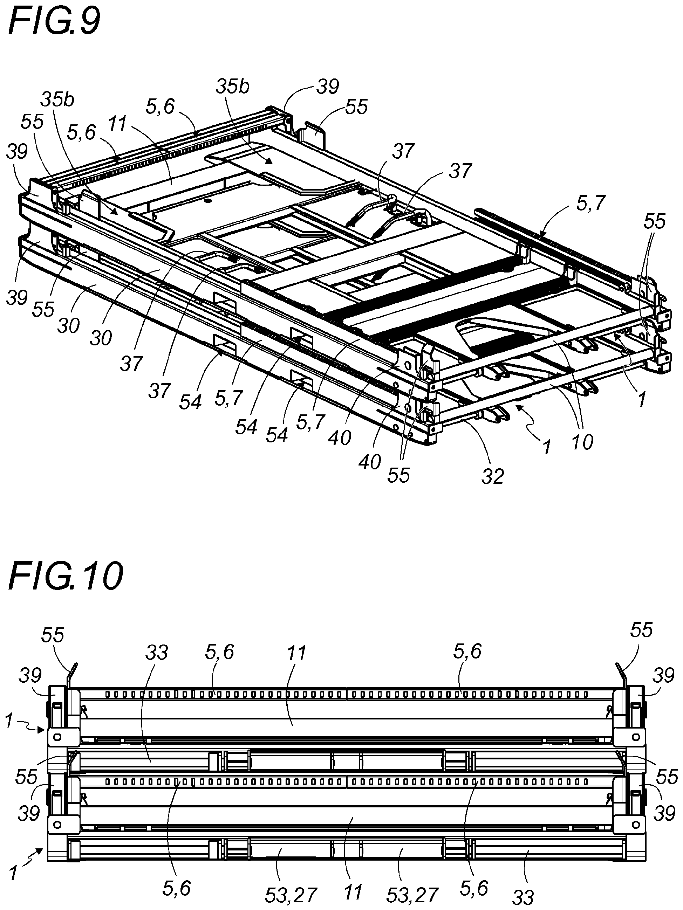

Dans le cas de la première variante de palette 1 représentée sur les figures 1 à 10, cette fonction de centrage automatique est remplie par d'autres éléments saillants de centrage : des excroissances 55, situées à proximité des coins de la structure porteuse supérieure 2 et qui s'étendent en saillie vers le haut à partir des longerons longitudinaux 9. Comme on peut le voir sur les figures 9 et 10, ces excroissances 55 servent de guide lors de l'empilement des palettes 1 l'une sur l'autre.

Comme c'est le cas de la deuxième variante représentée, la palette 1 selon l'invention peut également comporter en sous-face des béquilles ou plus préférentiellement des pieds à rouleau 48, repliables ou escamotables, et déployables sous la structure porteuse inférieure 3.

Lorsqu'ils sont déployés, de tels pieds à rouleau ou béquilles surélèvent la palette 1 par rapport au niveau du sol d'une hauteur avantageusement prévue pour placer la sous-face de la structure inférieure 3, et en particulier ses longerons 30 et 31, au niveau du plancher d'un conteneur 49 ou d'une palette de transport aérien 49a afin de faciliter l'engagement de la palette 1 sur celui-ci.

Ils permettent également de sortir les anses 45 repliables ou escamotables, qui se déploient vers le bas sous la structure porteuse inférieure 3, si la palette 1 en est pourvue. La palette 1 peut alors être manipulée par un chariot élévateur 29 placé transversalement par rapport à la palette, par exemple pour être déplacée latéralement.

Lorsqu'il s'agit de pieds à rouleau 48, la palette 1 peut être déplacée beaucoup plus facilement par le chariot élévateur 29 qui n'a plus qu'à pousser longitudinalement la palette 1 pour obtenir le roulement des rouleaux de ces pieds à rouleau 48.

Lorsqu'ils sont repliés ou escamotés, ces pieds à rouleau 48 ou béquilles ne représentent pas de surépaisseur en sous-face de la structure porteuse inférieure 3, ou constituent une très faible surépaisseur non gênante pour l'empilement des palettes repliées.

Lorsqu'il s'agit de pieds à rouleau 48, ceux-ci peuvent avantageusement être conçus pour que leur rouleau reste en contact avec le sol et soit capable de rouler même à l'état replié ou escamoté. Par ce roulement, ils aident ainsi au déplacement de la palette 1 par glissement sur le sol, par exemple lors de son chargement dans un conteneur 49 ou sur une palette de transport aérien 49a.

La palette 1 selon l'invention peut comporter en outre un ou plusieurs autres moyens avantageux, tels que, par exemple, un ou plusieurs éléments de butée longitudinale 50, ou un ou plusieurs éléments de butée latérale, qui garantissent le respect d'un certain espacement entre la palette chargée et les parois du conteneur 49 ou entre deux palettes adjacentes, afin d'empêcher les véhicules 4 transportés dont les extrémités dépassent généralement au-delà des structures porteuses 2, 3 de venir cogner contre les parois et de risquer ainsi d'être endommagés.

Ces éléments de butée longitudinale 50 ou latérale sont préférentiellement repliables ou escamotables pour ne pas augmenter la taille de la palette 1 à l'état replié, et par exemple télescopiques et/ou de longueur réglable à l'état déployé pour s'adapter aux différents gabarits de véhicules 4 transportés ou tailles de conteneur 49. Les éléments de butée longitudinale 50 représentés sont, par exemple, escamotables à l'intérieur des longerons extérieurs 30 de la structure porteuse inférieure 3.

De préférence, la palette 1 comporte en outre un ou plusieurs éléments d'ancrage 51, tel que par exemple un moyen de passage ou d'accrochage d'un moyen d'arrimage, tel qu'un câble 52, un filin ou une sangle de fixation de la palette 1 au conteneur 49 ou à la palette 49a, afin de parfaitement immobiliser la palette 1 chargée dans le conteneur 49 ou la palette en vue du transport.

Ces moyens de passage ou d'accrochage 51 sont préférentiellement situés au niveau des poteaux principaux 6 et des poteaux secondaires 7, et sont par exemple constitués d'ouvertures traversantes, qui peuvent être notamment les ouvertures de réception 26 servant également au réglage de la hauteur de la structure porteuse supérieure 2. Ils peuvent également être situés sur la structure porteuse supérieure 2, par exemple au niveau des organes de coulissement 19 et 20.

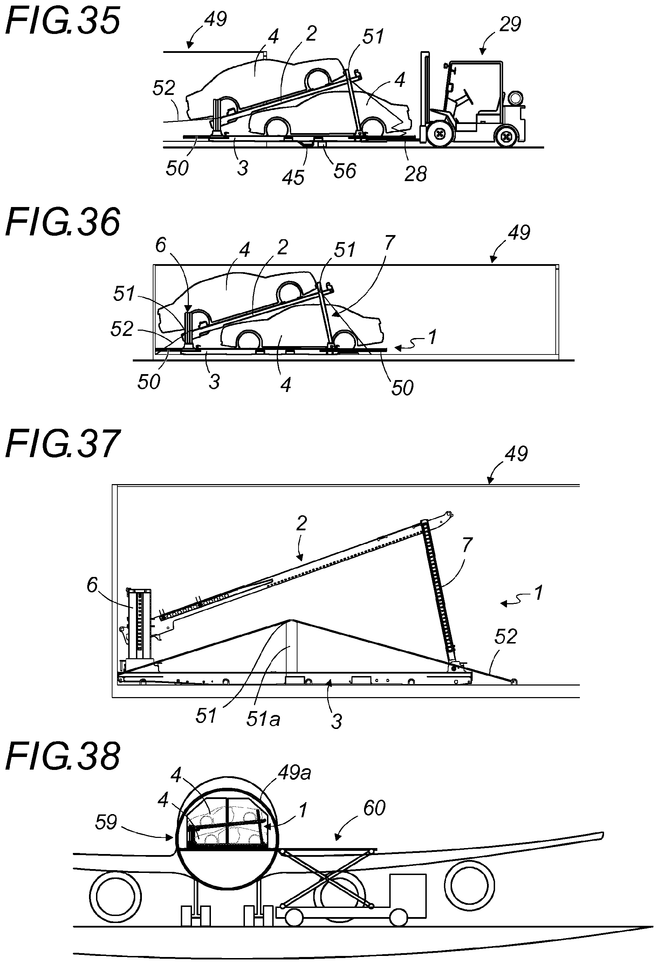

Ces éléments d'ancrage 51 peuvent également être situés au niveau d'un ou plusieurs poteaux intermédiaires supplémentaires 51a comme représenté sur la figure 37.

De tels poteaux intermédiaires supplémentaires 51a peuvent également servir directement d'éléments d'ancrage, si leur longueur est réglable, par exemple s'ils sont télescopiques, en venant appuyer contre le plafond du conteneur 49.

La palette 1 selon l'invention est prévue pour passer d'une configuration repliée représentée sur les figures 1, 9, 13 et 14, à une configuration entièrement dépliée représentée sur les figures 3, 11, 15 et 17.

En configuration repliée, la structure porteuse supérieure 2 est en position basse. Elle se trouve emboîtée dans la structure porteuse inférieure 3.

Dans les modes de réalisation représentés sur les figures 1 à 17, les poteaux principaux 6 s'étendent par-dessus la structure porteuse supérieure 2, en position couchée transversale par rapport à la direction générale de la palette 1. Les poteaux secondaires 7 s'étendent vers l'arrière en position couchée longitudinale par rapport à la direction générale de la palette 1, par-dessus les longerons extérieurs 30 de la structure porteuse inférieure 3.

Cependant, d'autres variantes peuvent être envisagées sans sortir de l'invention. Ainsi, sur la variante de la figure 18, les poteaux principaux 6 s'étendent longitudinalement lorsqu'ils sont en position couchée. Pour ne pas gêner ils doivent donc être réalisés plus fins que dans les variantes précédentes. De ce fait, une contre-fiche latérale 6a doit être ajoutée à chaque poteau principal 6 pour le renforcer lorsqu'il se trouve en position dressée.

Les structures porteuses supérieure 2 et inférieure 3 sont conçues pour s'emboîter l'une dans l'autre en configuration repliée de la palette 1. Ainsi, les longerons longitudinaux 9 de la structure porteuse supérieure 2 s'engagent avantageusement entre les longerons extérieurs 30 de la structure porteuse inférieure 3 afin de ne représenter qu'une surépaisseur extrêmement limitée par rapport à ceux-ci, comme on peut le voir par exemple sur la figure 21. Cette faible surépaisseur, ainsi que celle causée par les poteaux secondaires 7 (et éventuellement les poteaux principaux 6) en position couchée, ne gênent pas l'ouverture des portes latérales d'un véhicule 4 chargé sur la structure porteuse supérieure 2.

En outre, comme illustré par exemple sur la figure 20, les dispositifs supérieurs support de roues avant 12 et arrière 13 de la structure porteuse supérieure 2 se placent dans le prolongement des bandes de roulement 35a ou des zones de platelage 36a de la structure porteuse inférieure 3, ou juste au-dessus de celles-ci. Elles forment ensemble le chemin de roulement 35b, continu ou discontinu, qui permet une circulation aisée du véhicule automobile 4 à charger.

A l'état replié, les palettes 1 sont sensiblement plates et sont parfaitement empilables les unes sur les autres comme illustré sur les figures 9, 10 et 13, cet empilement pouvant avantageusement être facilité par la présence d'un moyen de centrage quelconque, par exemple les excroissances 55 ou les anses 57 déployables vers le haut dans l'espace central vide 46 de la palette 1, qui permettent la manutention dans les deux sens par le chariot élévateur 29 et jouent un rôle de centrage, comme explicité précédemment,

Afin de limiter le poids, l'encombrement et le coût de la palette 1 selon l'invention, celle-ci n'est pas motorisée, l'ensemble des mouvements nécessaires au déploiement, aux différentes phases de chargement et de déchargement, ou au repliage de cette palette étant effectués grâce à l'action d'un chariot élévateur 29 à fourche.

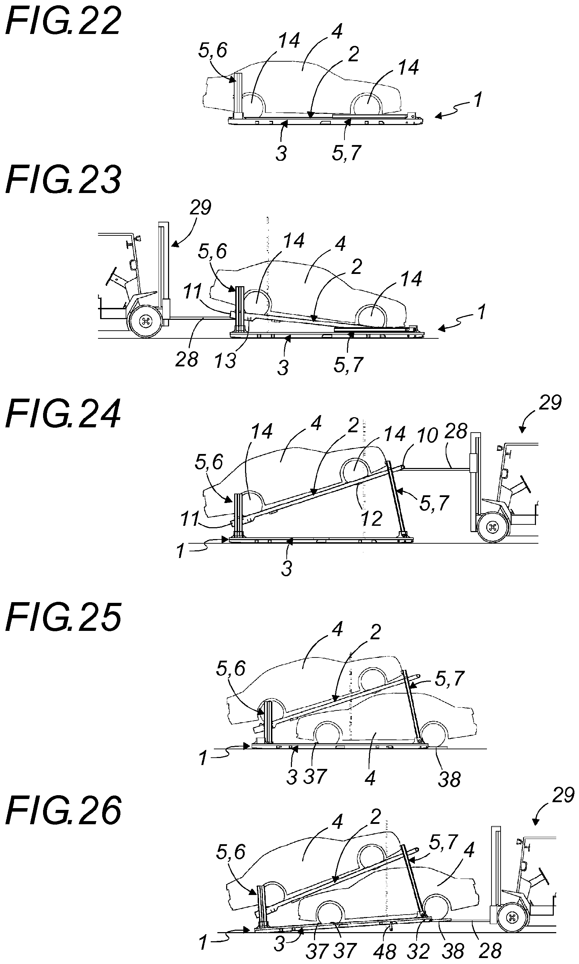

Pour rendre ce descriptif plus complet, les différentes étapes d'un procédé de déploiement et de chargement de véhicules automobiles sur une palette 1 correspondant aux variantes de la figure 1 et de la figure 11, puis de mise en place de cette palette 1 chargée à l'intérieur d'un conteneur de transport 49 vont maintenant être succinctement décrites en référence aux figures 22 à 36.

Une palette 1 repliée comme représentée sur la figure 1 ou 13 est tout d'abord posée sur le sol.

Les deux poteaux principaux 6 sont ensuite placés en position dressée sensiblement verticale comme représenté sur la figure 2. Pour cela, on enlève les broches 43 des ouvertures 44 supérieures du logement de réception arrière 39. On fait pivoter les poteaux principaux 6 vers le haut et on enfonce leur extrémité inférieure 41 plus bas dans le logement de réception arrière 39 correspondant. On verrouille ensuite les deux poteaux principaux 6 au moyen des broches 43 qui sont cette fois engagées dans les ouvertures 44 inférieures du logement de réception arrière 39.

Les poteaux principaux 6 se trouvent alors en appui contre la face extérieure des logements de réception arrière 39, les broches 43 reprenant tous les efforts longitudinaux.

Un véhicule 4 peut alors être chargé sur la structure porteuse supérieure 2, comme représenté sur la figure 22, en le faisant rouler sur le chemin de roulement 35b.

Comme expliqué précédemment, on peut également enlever complètement les poteaux principaux 6 ou les mettre en position dressée inclinée latéralement vers l'extérieur, pour faciliter le chargement de ce véhicule 4. Une fois le chargement effectué, les poteaux principaux 6 sont remis en position dressée sensiblement verticale comme représenté et sont verrouillés dans cette position.

On arrête le véhicule 4 lorsque ses roues 14 sont correctement disposées sur les dispositifs supérieurs support de roues avant 12 et arrière 13 de la structure porteuse supérieure 2 et on les immobilise par exemple au moyen de sangles adaptées.

Dans le cas où l'on ne souhaite charger qu'un seul véhicule 4 sur la palette 1, le procédé de chargement est terminé et il ne reste plus qu'à placer la palette 1 dans le conteneur 49 comme expliqué ci-après.

Dans le cas où l'on souhaite charger deux véhicules 4 sur la palette 1, un chariot élévateur 29 à fourche vient, comme représenté sur la figure 23, soulever la traverse d'extrémité arrière 11 de la structure porteuse supérieure 2 à l'aide de sa fourche 28 qu'il engage dans les emplacements 27. Lors de ce soulèvement, les tiges cylindriques 21 servant d'organes de coulissement arrière 20 coulissent dans la rainure 22 des poteaux principaux 6.

Lorsque la hauteur choisie pour l'arrière de la structure porteuse supérieure 2 est atteinte, on verrouille la traverse d'extrémité arrière 11 en position haute à l'aide de deux broches 25 de chaque côté, que l'on engage dans les ouvertures de réception 26 des poteaux principaux 6, situées juste au-dessous et juste au-dessus de la tige cylindrique 21 correspondante afin de la verrouiller dans les deux sens, vers le haut et vers le bas.

Le chariot élévateur 28 fait alors le tour de la palette et vient soulever la traverse d'extrémité avant 10 de la structure porteuse supérieure 2, comme représenté sur la figure 24, jusqu'à ce que la hauteur choisie pour l'avant de la structure porteuse supérieure 2 soit atteinte.

Ce soulèvement de la traverse d'extrémité avant 10 provoque le redressement automatiquement des poteaux secondaires 7 articulés, qui pivotent du fait du coulissement des tiges cylindriques 21 dans leur rainure 22 et passent d'une position couchée longitudinale à une position dressée inclinée vers l'arrière.

Comme précédemment, la traverse d'extrémité avant 10 est ensuite verrouillée en position haute, dans les deux sens, à l'aide de deux broches 25 que l'on engage dans les ouvertures de réception 26 des poteaux secondaire 7, situées juste au-dessous et juste au-dessus des tiges cylindriques 21.

On procède ensuite au chargement du deuxième véhicule 4 sur la structure porteuse inférieure 3 de la palette 1, comme représenté sur la figure 25. Si nécessaire, on déploie préalablement les rallonges 38 pour prolonger l'ensemble inférieur support de roues 35. On engage ensuite le véhicule 4 sur la structure porteuse inférieure 3, en le faisant rouler sur le chemin de roulement 35b dans le sens opposé au premier véhicule 4.

Lorsque les roues 14 de ce deuxième véhicule 4 sont correctement positionnées sur l'ensemble inférieur support de roues 35, elles sont immobilisées à l'aide de cales de roue 37 ou de sangles adaptées.

Comme représenté sur les figures 26 et 27, on soulève ensuite légèrement la palette 1 chargée, d'un côté puis de l'autre, en la saisissant au niveau des traverses d'extrémité avant 32 et arrière 33 de la structure porteuse inférieure 3 au moyen du chariot élévateur 29, afin de déployer en sous-face ses béquilles ou ses pieds à rouleau 48 lorsque la palette 1 en est pourvue comme c'est le cas de la certaines variantes de palette 1 décrites dans cette demande.

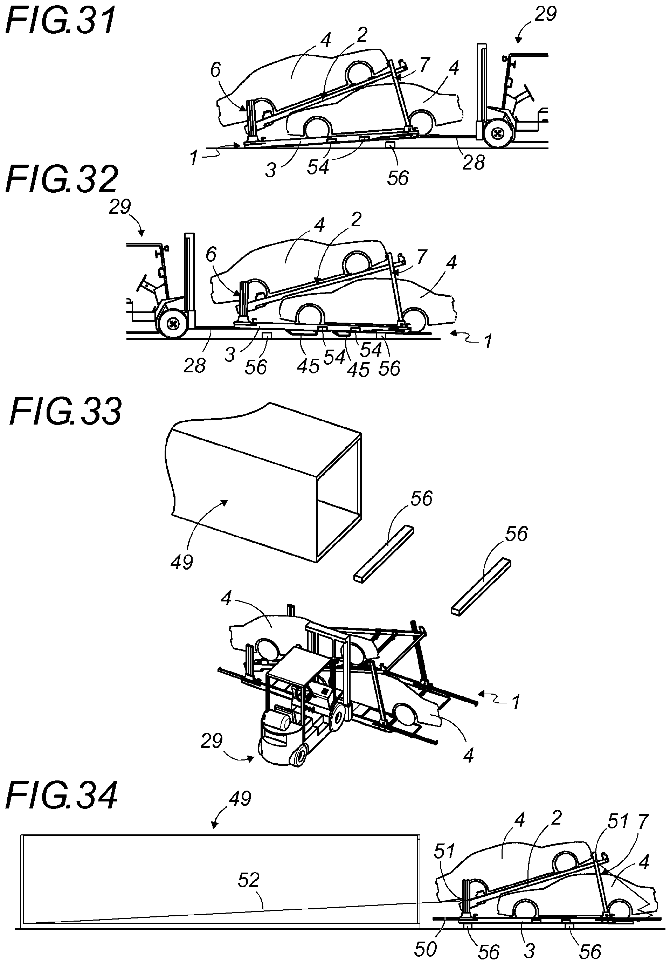

Dans le cas contraire, on glisse un bastaing 56 de bois sous les deux extrémités de la palette chargée comme représenté sur les figures 31 et 32. Dans ce cas, les anses 45 situées sous les longerons extérieurs 30 de la structure porteuse inférieure 3 se déploient automatiquement vers le bas par gravité. Ces bastaings 56 permettent, comme les béquilles ou pieds à rouleau 48, d'aligner le niveau inférieur de la palette 1 à la hauteur du plancher du conteneur 49.

Si la palette 1 chargée n'est pas correctement positionnée en face de l'ouverture d'accès du conteneur 49, comme représenté sur la figure 33, le chariot élévateur 29 peut alors se placer transversalement par rapport à la palette 1 et la faire translater latéralement en engageant sa fourche 28 dans les poches 54, ou dans les anses 45 si le centre de gravité n'est pas situé entre ces poches 54.

Une fois la palette 1 correctement positionnée en face de l'ouverture du conteneur 49, on replie ses anses 45 si nécessaire et on fait passer un moyen d'arrimage tel que des câbles 52, sangles ou filins, dont une extrémité a été préalablement fixée au fond du conteneur 49, dans les moyens de passage ou d'accrochage servant d'éléments d'ancrage 51 par exemple situés sur les poteaux principaux 6 et secondaires 7. Ces câbles 52 d'arrimage, sangles ou filins se trouvent alors en appui glissant sur la palette 1.

A un moment quelconque, postérieur au chargement du ou des véhicules 4 sur la palette 1 mais préalable à l'engagement de la palette 1 dans le conteneur 49, on déploie les butées longitudinales 50 et éventuellement des butées latérales si la palette en est pourvue. La longueur de ces butées longitudinales 50 est réglée pour dépasser au-delà des extrémités en porte-à-faux du ou des véhicules 4 chargés sur la palette.

Le chariot élévateur 29 vient ensuite se placer à l'avant de la palette 1 et pousse celle-ci jusque dans le conteneur 49, comme représenté sur la figure 29 ou 35. Ce déplacement se fait très facilement, car la palette 1 chargée glisse sur les bastings 56 puis sur ses rouleaux 48a ou ses longerons 30, 31 à sous-face préférentiellement en forme de ski, ou roule sur ses pieds à rouleau 48 qui supportent au moins partiellement son poids.

Une fois la palette partiellement engagée dans le conteneur 49, on vient si besoin replier successivement les premiers pieds à rouleau 48 (situés à l'arrière), puis les seconds pieds à rouleau 48 (situés à l'avant) au fur et à mesure de la progression de l'engagement de la palette 1.

Si les anses 45 ont comme précédemment décrit une forme trapézoïdale progressive et une inclinaison oblique adaptée, elles se replient automatiquement sous la palette lorsqu'on l'engage à l'intérieur du conteneur 49. On évite ainsi les risques d'endommagement dans le cas où l'opérateur oublierait de les replier.

Le chariot élévateur 29 continue à pousser la palette chargée 1 jusqu'au fond du conteneur 49. Avantageusement dans le cas d'une palette 1 munie de rouleaux 48a ou de pieds à rouleau 48, les rouleaux participent au glissement de la palette 1 chargée jusqu'à sa position de transport à l'intérieur du conteneur 49. Sinon, les moyens de glissement, les rouleaux ou les skis des longerons 30, 31 peuvent faciliter la translation sur le plancher du conteneur 49.

Pendant toute la durée du mouvement d'engagement puis de translation de la palette 1 à l'intérieur du conteneur 49, les câbles 52 d'arrimage sont retenus légèrement tendus, par exemple par un opérateur. Une fois la palette 1 placée en position de transport, les butées 50 en appui sur le fond du conteneur, le chariot élévateur 29 se retire. Les câbles 52 ou sangles de fixation sont tendus et fixés au sol, par exemple à des anneaux prévus à cet effet sur le plancher du conteneur 49, afin d'arrimer la palette 1 chargée en vue du transport comme représenté sur la figure 36.

Dans le cas d'un conteneur 49 de 12 mètres (40 pieds), une deuxième palette 1 identique peut être chargée de un ou deux véhicules 4, puis engagée à son tour et arrimée dans le conteneur 49, comme représenté sur la figure 30. Cette deuxième palette chargée peut également être remplacée par un empilement de palettes 1 vides en configuration repliée.

Le conteneur 49 est alors refermé et prêt au départ. Grâce à la palette 1 selon l'invention, son volume intérieur est parfaitement optimisé et il peut transporter simultanément quatre véhicules 4 sans risque d'endommagement.

Les butées longitudinales 50 des deux palettes sont en appui contre la paroi de fond et la porte du conteneur 49 pour celles se trouvant aux extrémités des deux palettes 1, et en contact les unes avec les autres pour celles situées entre les deux palettes 1. Les deux palettes 1 sont ainsi parfaitement immobilisées dans la direction longitudinale. Elles sont également immobilisées dans la direction latérale, au moyen de butées latérale, ou plus simplement par leur propre largeur prévue à peine inférieure à celle du conteneur 49. Une fois arrimés, les câbles 52 assurent la retenue vers le haut des palettes 1. Les palettes 1 transportées sont ainsi parfaitement immobilisées dans toutes les directions comme représenté sur la figure 30.

Dans le cas où l'on utilise des bastaings 56, ceux-ci peuvent également être rangés et transportés dans le conteneur 49. Ils peuvent avantageusement être maintenus en appui contre la porte par les butées longitudinales 50 et par exemple retenus au moyen de sangles.

Il n'est pas nécessaire de décrire l'opération inverse de déchargement et de repliage de la palette 1 qui pourra être aisément déduite par l'homme du métier à partir des explications ci-dessus.

Toutefois, afin de faciliter le retrait des palettes 1 hors du conteneur 49, un ou plusieurs trous 58, ou tout autre moyen d'accrochage, peuvent avantageusement être prévus au niveau de la traverse d'extrémité avant 32 de la palette afin d'y attacher un moyen de tirage quelconque pour faire sortir la palette du conteneur 49.

Le chargement d'une palette 1 selon l'invention en vue de sa mise en place sur une palette de transport aérien 49a se fait de la même façon, la palette étant simplement réglée de manière à respecter le gabarit aérien imposé. Les rallonges 38 restent donc repliées.

Une fois la palette 1 chargée sur la palette de transport aérien 49a, cette dernière est chargée dans la soute d'un avion-cargo 59 au moyen d'un véhicule élévateur dédié 60 comme représenté sur la figure 38.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Palette (1) déployable, non motorisée, permettant le chargement d'un ou de deux véhicules (4) automobiles en vue de leur transport dans un conteneur (49) ou une palette de transport aérien (49a), palette (1) comprenant :
- une structure porteuse inférieure (3) et une structure porteuse supérieure (2), capables chacune de supporter un véhicule (4) automobile, la structure porteuse supérieure (2) étant prévue pour passer alternativement d'une position basse à une position haute dans laquelle elle est maintenue surélevée au-dessus de la structure porteuse inférieure (3),
- deux poteaux principaux (6) et deux poteaux secondaires (7), qui sont fixés au niveau de leur extrémité inférieure (41, 42) respectivement à l'arrière, pour les poteaux principaux (6), et à l'avant, pour les poteaux secondaires (7), de la structure porteuse inférieure (3), qui se trouvent alternativement en position couchée ou en position dressée, et qui portent la structure porteuse supérieure (2) en position haute ;
- des organes de coulissement avant (19) et arrière (20), qui permettent le coulissement de la structure porteuse supérieure (2) le long des poteaux principaux (6) et des poteaux secondaires (7) pour passer de sa position basse à sa position haute et inversement ; la structure porteuse supérieure (2) étant une structure en cadre, sensiblement plane, qui comprend un dispositif supérieur support de roues avant (12) et un dispositif supérieur support de roues arrière (13), discontinus l'un de l'autre et destinés à recevoir les roues (14) d'un véhicule automobile (4) en position de transport sur la structure porteuse supérieure (2), et qui délimite un espace central (8) libre le plus grand possible; la structure porteuse inférieure (3) étant une structure sensiblement plane qui comprend un ensemble inférieur support de roues (35) destiné à recevoir les roues (14) d'un véhicule automobile (4) en position de transport sur la structure porteuse inférieure (3) ; palette (1) **caractérisée en ce qu'**en position basse, la structure porteuse supérieure (2) est emboîtée dans la structure porteuse inférieure (3), ses dispositifs supérieurs support de roues avant (12) et arrière (13) s'insérant sur ou dans le prolongement de l'ensemble inférieur support de roues (35) de la structure porteuse inférieure (3) et formant ainsi avec cet ensemble inférieur support de roues (35) tout ou partie d'un chemin de roulement (35b) bas qui permet le chargement sur la structure porteuse supérieure (2) d'un véhicule automobile (4) jusqu'en position de transport, par son propre déplacement et sans rampe d'accès.

2. Palette (1) selon la revendication 1 **caractérisée en ce que** la structure porteuse inférieure (3) est un châssis ajouré comprenant, en plus de l'ensemble inférieur support de roue (35) :
- deux longerons extérieurs (30) et deux longerons intérieurs (31) ; et
- un ensemble de traverses, dont au moins une traverse d'extrémité avant (32) et une traverse d'extrémité arrière (33), qui réunissent lesdits longerons extérieurs (30) et intérieurs (31).

3. Palette (1) selon l'une quelconque des revendications précédentes **caractérisée en ce qu'**elle comporte en outre des moyens de retenue (24) qui bloquent les organes de coulissement avant (19) et arrière (20) lorsque la position haute de la structure porteuse supérieure (2) est atteinte, ces moyens de retenue (24) étant susceptibles de bloquer les organes de coulissement avant (19) et arrière (20) à différentes hauteurs le long des poteaux principaux (6) et des poteaux secondaires (7) respectivement, afin de régler l'altitude de la position haute de la structure porteuse supérieure (2).

4. Palette (1) selon l'une quelconque des revendications précédentes **caractérisée en ce que**, en position couchée, les poteaux principaux (6) s'étendent transversalement par rapport à la direction générale de la palette (1).

5. Palette (1) selon l'une quelconque des revendications précédentes **caractérisée en ce que**, en position dressée, les poteaux principaux (6) sont inclinés latéralement vers l'extérieur ou sont sensiblement verticaux.

6. Palette (1) selon l'une quelconque des revendications précédentes **caractérisée en ce que** les poteaux secondaires (7) sont fixés de manière articulée par leur extrémité inférieure (42) à l'avant de la structure porteuse inférieure (3), et peuvent passer par pivotement de la position couchée à la position dressée.

7. Palette (1) selon l'une quelconque des revendications précédentes **caractérisée en ce que**, en position dressée, les poteaux secondaires (7) sont inclinés vers l'arrière de la palette (1).

8. Palette (1) selon les revendications 6 et 7 **caractérisée en ce que** les poteaux secondaires (7) sont fixés à la structure porteuse supérieure (2) de manière à se redresser automatiquement lorsque l'avant de la structure porteuse supérieure (2) est soulevé, leur inclinaison en position dressée dépendant de la hauteur à laquelle est soulevée l'avant de la structure porteuse supérieure (2).

9. Palette (1) selon l'une quelconque des revendications précédentes **caractérisée en ce que** l'ensemble inférieur support de roues (35) est un ensemble de quatre structures individuelles destinées à recevoir chacune l'une des roues (14) du véhicule automobile (4) transporté, ou un ensemble de deux structures transversales destinées à recevoir pour l'une les deux roues avant et pour l'autre les deux roues arrière du véhicule automobile (4) transporté, ou un ensemble de deux structures longitudinales destinées à recevoir pour l'une les deux roues gauches et pour l'autre les deux roues droites du véhicule automobile (4) transporté.

10. Palette (1) l'une quelconque des revendications précédentes caractérisée en ce l'ensemble inférieur support de roues (35) comporte en outre des rallonges (38), amovibles ou repliables ou escamotables, qui, en position déployée, constituent une prolongation du chemin de roulement (35b).

11. Palette (1) selon l'une quelconque des revendications précédentes **caractérisée en ce que** le dispositif supérieur support de roues avant (12) ou le dispositif supérieur support de roues arrière (13) est un ensemble de deux structures individuelles destinées à recevoir chacune l'une des deux roues avant ou arrière du véhicule automobile (4) transporté, ou une structure transversale destinées à recevoir les deux roues avant ou les deux roues arrière du véhicule automobile (4) transporté.

12. Palette (1) selon l'une quelconque des revendications précédentes **caractérisée en ce que** le dispositif supérieur support de roues avant (12) ou le dispositif supérieur support de roues arrière (13) est déplaçable longitudinalement par rapport à la direction générale de la palette.

13. Palette (1) selon l'une quelconque des revendications précédentes **caractérisée en ce qu'**elle comporte des moyens de réception (53), aptes à coopérer avec la fourche (28) d'un chariot élévateur (29) à fourche, qui sont situés à l'avant et à l'arrière de la structure porteuse supérieure (2), et sur les côtés de la structure porteuse inférieure (3).

14. Palette (1) selon l'une quelconque des revendications précédentes **caractérisée en ce que** la structure porteuse inférieure (3) comporte en sous-face des roulettes, des rouleaux (48a), des pièces de glissement, des longerons en forme de ski, des béquilles, ou des pieds à rouleaux (48) ou à roulettes déployables sous la structure porteuse inférieure (3).

15. Palette (1) selon l'une quelconque des revendications précédentes **caractérisée en ce qu'**elle comporte en outre au moins un élément de butée longitudinale (50), ou un élément d'ancrage.

16. Palette (1) selon l'une quelconque des revendications précédentes **caractérisée en ce que**, lorsqu'elle est entièrement repliée, elle est empilable sur d'autres palettes (1) identiques et **en ce qu'**elle comporte des éléments saillants de centrage (57, 55) permettant le centrage automatique d'une palette (1) identique empilée par-dessus.

17. Procédé de chargement d'un ou de deux véhicules (4) automobiles à l'intérieur d'un conteneur (49) ou sur une palette de transport aérien (49a) au moyen d'une palette (1) selon la revendication 1, le procédé comprenant les étapes suivantes :
- poser la palette (1) au sol, la structure porteuse supérieure (2) étant emboîtée dans la structure porteuse inférieure (3) ;
- charger un véhicule (4) sur la structure porteuse supérieure (2) en le faisant rouler sur le chemin de roulement (35b) jusqu'à ce que ses roues (14) soient disposées sur le dispositif supérieur support de roues avant (12) et le dispositif supérieur support de roues arrière (13) de la structure porteuse supérieure (2) ;
- immobiliser les roues (14) de ce véhicule (4) sur les dispositifs supérieurs support de roues avant (12) et arrière (13) correspondants ;
- pousser la palette (1) chargée à l'aide d'un chariot élévateur (29) à fourche jusqu'à l'intérieur du conteneur (49) ou sur la palette de transport aérien (49a).

18. Procédé de chargement selon la revendication 17 **caractérisé en ce qu'**il comprend en outre l'étape suivante :
- placer les deux poteaux principaux (6) en position dressée ;
cette étape s'effectuant avant ou après le chargement du véhicule (4) sur la structure porteuse supérieure (2).

19. Procédé de chargement selon la revendication 17 ou 18 **caractérisé en ce que**, avant l'étape consistant à pousser la palette (1) chargée à l'aide d'un chariot élévateur (29) à fourche jusqu'à l'intérieur du conteneur (49) ou sur la palette de transport aérien (49a), il comprend en outre les étapes suivantes :
- soulever l'arrière de la structure porteuse supérieure (2) à l'aide de la fourche (28) d'un chariot élévateur (29) à fourche, en faisant coulisser les organes de coulissement arrière (20) le long des poteaux principaux (6) ;
- verrouiller l'arrière de la structure porteuse supérieure (2) en position haute ;
- soulever l'avant de la structure porteuse supérieure (2) à l'aide de la fourche (28) du chariot élévateur (29) à fourche en faisant coulisser les organes de coulissement avant (19) le long des poteaux secondaires (7) et en provoquant ainsi le pivotement desdits poteaux secondaires (7) articulés qui se redressent automatiquement lors du soulèvement de l'avant de la structure porteuse supérieure (2) et passent d'une position couchée à une position dressée ;
- verrouiller l'avant de la structure porteuse supérieure (2) en position haute ;
- charger un deuxième véhicule (4) sur la structure porteuse inférieure (3), en le faisant rouler sur la structure porteuse inférieure (3) jusqu'à ce que ses roues soient disposées sur l'ensemble inférieur support de roues (35) ;
- immobiliser les roues (14) du deuxième véhicule (4) sur l'ensemble inférieur support de roues (35).

## Patentansprüche

1. Nicht motorisierte aufklappbare Palette (1) zur Beladung mit einem oder zwei Automobilen (4) im Hinblick auf ihren Transport in einem Container (49) oder einer Luftfracht-Palette (49a), wobei diese Palette (1) umfasst:
- eine untere Tragestruktur (3) und eine obere Tragestruktur (2), die jeweils in der Lage sind, ein Automobil (4) zu tragen, wobei die obere Tragestruktur (2) dazu vorgesehen ist, alternativ von einer unteren Position in eine obere Position zu gelangen, in der sie über der unteren Tragestruktur (3) angehoben gehalten wird,
- zwei Hauptpfosten (6) und zwei Sekundärpfosten (7), die in Höhe ihres unteren Endes (41, 42), hinten, was die Hauptpfosten (6) angeht und vorne bei den Sekundärpfosten (7), an der unteren Tragestruktur (3) befestigt sind, die sich alternativ in liegender Position oder in aufgerichteter Position befinden können und die die obere Tragestruktur (2) in der oberen Position stützen;
- vordere (19) und hintere (20) Gleitvorrichtungen, mit denen die obere Tragestruktur (2) entlang den Hauptpfosten (6) und den Sekundärpfosten (7) gleiten kann, um von der unteren Position in die obere Position zu gelangen und umgekehrt;
- wobei es sich bei der oberen Tragestruktur (2) um eine Rahmenstruktur handelt, die im Wesentlichen eben ist und eine obere Vorrichtung zum Tragen der Vorderräder (12) und eine obere Vorrichtung zum Tragen der Hinterräder (13) umfasst, die voneinander unabhängig sind und zur Aufnahme der Räder (14) eines Automobils (4) in der Transportposition auf der oberen Tragestruktur (2) dient und die einen möglichst großen zentralen freien Raum (8) umgrenzt,
- wobei es sich bei der unteren Tragestruktur (3) um eine im Wesentlichen ebene Struktur handelt, die eine untere Radhalteeinheit (35) umfasst, die zur Aufnahme der Räder (14) eines Automobils (4) in der Transportposition auf der unteren Tragestruktur (3) bestimmt ist, Palette (1),
**dadurch gekennzeichnet,**
**dass** in der unteren Position die obere Tragestruktur (2) in die untere Tragestruktur (3) eingeschachtelt ist, diese oberen vorderen (12) und hinteren (13) Radhaltevorrichtungen auf oder in der Verlängerung der unteren Radhalteeinheit (35) der unteren Tragestruktur (3) eingesteckt sind und so, zusammen mit der unteren Radhalteeinheit (35) eine vollständige oder teilweise Lauffläche (35b) bilden, die die Ladung eines Automobils (4) auf der oberen Tragestruktur (2) bis in die Transportposition durch seine eigene Verschiebung und ohne Auffahrrampe ermöglicht.

2. Palette (1) gemäß Anspruch 1, **dadurch gekennzeichnet, dass** es sich bei der unteren Tragestruktur (3) um einen durchbrochenen Rahmen handelt, der zusätzlich zur unteren Radhalteeinheit (35) umfasst:
- zwei Längsträger außen (30) und zwei Längsträger innen (31); und
- eine Einheit aus Querträger, davon mindestens einen vorderen End-Querträger (32) und einen hinteren End-Querträger (33), die diese Außen-(30) und Innen- (31) Längsträger verbinden.

3. Palette (1) gemäß einem der vorstehenden Ansprüche, **dadurch gekennzeichnet, dass** sie außerdem Halteelemente (24) umfasst, die die vorderen (19) und hinteren (20) Gleitvorrichtungen blockieren, wenn die obere Position der oberen Tragestruktur (2) erreicht ist, wobei diese Halteelemente (24) in der Lage sind, die vorderen (19) und hinteren (20) Gleitvorrichtungen in verschiedenen Höhen entlang der Hauptpfosten (6) und der Sekundärpfosten (7) zu blockieren, um die Höhe der oberen Position der oberen Tragestruktur (2) zu steuern.

4. Palette (1) gemäß einem der vorstehenden Ansprüche, **dadurch gekennzeichnet, dass** in der liegenden Position die Hauptpfosten (6) quer zur allgemeinen Richtung der Palette (1) verlaufen.

5. Palette (1) gemäß einem der vorstehenden Ansprüche, **dadurch gekennzeichnet, dass** in der aufgerichteten Position die Hauptpfosten (6) seitlich nach außen geneigt oder deutlich vertikal sind.

6. Palette (1) gemäß einem der vorstehenden Ansprüche, **dadurch gekennzeichnet, dass** die Sekundärpfosten (7) über Gelenk mit ihrem unteren Endstück (42) vorne an der unteren Tragestruktur (3) befestigt sind und von der liegenden Position in die aufgerichtete Position gekippt werden können.

7. Palette (1) gemäß einem der vorstehenden Ansprüche, **dadurch gekennzeichnet, dass** in der aufgerichteten Position die Sekundärpfosten (7) bezogen auf die Palette (1) nach hinten geneigt sind.

8. Palette (1) gemäß einem der Ansprüche 6 und 7, **dadurch gekennzeichnet, dass** die Sekundärpfosten (7) an der oberen Tragestruktur (2) so befestigt sind, dass sie sich automatisch aufrichten, wenn der Vorderteil der oberen Tragestruktur (2) angehoben wird, wobei ihre Neigung in der aufgerichteten Position von der Höhe abhängt, in die das Vorderteil der oberen Tragestruktur (2) gehoben wird.

9. Palette (1) gemäß einem der vorstehenden Ansprüche, **dadurch gekennzeichnet, dass** die untere Radhalteeinheit (35) eine Einheit aus vier einzelnen Strukturen, die jeweils eines der Räder (14) des transportierten Automobils (4) aufnehmen, oder eine Einheit aus zwei Querstrukturen, die dazu bestimmt ist, dass eine die beiden Vorderräder und die andere die beiden Hinterräder des transportierten Automobils (4) aufnimmt, oder eine Einheit aus zwei Längsstrukturen ist, die dazu bestimmt sind, dass eine die beiden linken Räder und die andere die beiden rechten Räder des transportierten Automobils (4) aufnimmt.

10. Palette (1) gemäß einem der vorstehenden Ansprüche, **dadurch gekennzeichnet, dass** die untere Radhalteeinheit (35) außerdem abnehmbare oder ausklappbare oder einschiebbare Verlängerungen (38) enthält, die in der ausgefahrenen Position eine Verlängerung der Lauffläche (35b) bilden.

11. Palette (1) gemäß einem der vorstehenden Ansprüche, **dadurch gekennzeichnet, dass** die obere Haltevorrichtung der Vorderräder (12) oder die obere Haltevorrichtung der Hinterräder (13) eine Einheit aus zwei einzelnen Strukturen, die dazu bestimmt sind, jeweils eines der beiden Vorder- oder Hinterräder des transportierten Automobils (4) aufzunehmen, oder eine Querstruktur bildet, die dazu bestimmt ist, die beiden Vorderräder oder die beiden Hinterräder des transportierten Automobils (4) aufzunehmen.

12. Palette (1) gemäß einem der vorstehenden Ansprüche, **dadurch gekennzeichnet, dass** die obere Haltevorrichtung der Vorderräder (12) oder die obere Haltevorrichtung der Hinterräder (13) in Längsrichtung bezogen auf die allgemeine Richtung der Palette verschiebbar ist.

13. Palette (1) gemäß einem der vorstehenden Ansprüche, **dadurch gekennzeichnet, dass** sie Aufnahmevorrichtungen (53) enthält, die in der Lage sind, mit der Gabel (28) eines Gabelstaplers (29) zusammenzuarbeiten und die sich vorne und hinten an der oberen Tragestruktur (2) und auf den Seiten der unteren Tragestruktur (3) befinden.

14. Palette (1) gemäß einem der vorstehenden Ansprüche, **dadurch gekennzeichnet, dass** die untere Tragestruktur (3) auf der Unterseite Rollen, Walzen (48a), Gleitelemente, skiförmige Längsträger, Stützen oder Walzen-(48) oder Rollenfüße aufweist, die unter die untere Tragestruktur (3) ausgefahren werden können.

15. Palette (1) gemäß einem der vorstehenden Ansprüche, **dadurch gekennzeichnet, dass** sie außerdem mindestens ein Anschlagelement für die Längsrichtung (50) oder ein Verankerungselement enthält.

16. Palette (1) gemäß einem der vorstehenden Ansprüche, **dadurch gekennzeichnet, dass** sie, wenn sie vollständig eingeklappt ist, auf andere, identische Paletten (1) gestapelt werden kann und dass sie auskragende Zentrierelemente (57, 55) enthält, die die automatische Zentrierung einer darüber gestapelten identischen Palette (1) erlaubt.

17. Verfahren zum Laden von ein oder zwei Automobilen (4) in einen Container (49) oder auf eine Luftfracht-Palette (49a), mittels einer Palette (1) gemäß Anspruch 1, wobei das Verfahren die folgenden Schritte umfasst:
- Abstellen der Palette (1) auf dem Boden, wobei die obere Tragestruktur (2) dabei in die untere Tragestruktur (3) eingeschachtelt ist;
- Laden eines Automobils (4) auf die obere Tragestruktur (2), indem es über die Lauffläche (35b) gerollt wird, bis die Räder (14) auf der oberen Haltevorrichtung der Vorderräder (12) oder der oberen Haltevorrichtung der Hinterräder (13) der oberen Tragestruktur (2) angeordnet sind;
- Immobilisieren der Räder (14) dieses Automobils (4) auf den entsprechenden Haltevorrichtung der Vorderräder (12) oder Hinterräder (13)
- Schieben der beladenen Palette (1) mittels eines Gabelstaplers (29) bis ins Innere des Containers (49) oder der Luftfracht-Palette (49a).

18. Ladeverfahren gemäß Anspruch 17, **dadurch gekennzeichnet, dass** er außerdem den folgenden Schritt enthält:
- die beiden Hauptpfosten (6) in die aufgerichtete Position bringen;
wobei dieser Schritt vor oder nach dem Laden des Fahrzeugs (4) auf die obere Tragestruktur (2) durchgeführt wird.

19. Ladeverfahren gemäß Anspruch 17 oder 18, **dadurch gekennzeichnet, dass** vor dem Schritt, der darin besteht, die beladene Palette (1) mittels eines Gabelstaplers (29) bis ins Innere des Containers (49) oder auf die Luftfracht-Palette (49a) zu schieben, außerdem die folgenden Schritte umfasst:
- Anheben des hinteren Teils der oberen Tragestruktur (2) mittels der Gabel (28) eines Gabelstaplers (29), indem die hinteren Gleitvorrichtungen (20) entlang der Hauptpfosten (6) gleiten;
- Verriegelung des hinteren Teils der oberen Tragestruktur (2) in der oberen Position;
- Anheben des vorderen Teils der oberen Tragestruktur (2) mittels der Gabel (28) eines Gabelstaplers (29), indem die vorderen Gleitvorrichtungen (19) entlang der Sekundärpfosten (7) gleiten und auf diese Art und Weise das Kippen dieser mit Gelenk verbundenen Sekundärpfosten (7) zu veranlassen, die sich beim Anheben des vorderen Teils der oberen Tragestruktur (2) heben und aus der liegenden Position in die aufgerichtete Position gelangen;
- Verriegelung des vorderen Teils der oberen Tragestruktur (2) in der oberen Position;
- Laden eines zweiten Fahrzeugs (4) auf die untere Tragestruktur (3), indem es über die untere Tragestruktur (3) gerollt wird, bis die Räder auf der unteren Radhalteeinheit (35) angeordnet sind;
- Immobilisieren der Räder (14) des zweiten Fahrzeugs (4) auf der unteren Radhalteeinheit (35).

## Claims

1. Pallet (1) deployable, non-motorized, designed for loading one or two motor vehicles (4) for their transport within a container (49) or an airplane pallet (49a), the pallet (1) comprising:
- a bottom support structure (3) and a top support structure (2), each capable of supporting a motor vehicle (4), the top support structure (2) being provided in order to alternately move from a lower position to an upper position wherein it is maintained, raised above the bottom support structure (3);
- two main posts (6) and two secondary posts (7), which are attached at the lower ends (41, 42) thereof, respectively, at the rear, for the main posts (6), and at the front, for the secondary posts (7), of the bottom support structure (3), which are alternatively to be found in a lying position or an erected position, and which carry the top support structure (2) in the upper position;
- front sliding members (19) and rear sliding members (20), allowing for the sliding of the top support structure (2) along the main posts (6) and secondary posts (7) in order to pass from a lower position thereof to an upper position thereof and vice versa;
the top support structure (2) being a framework structure that is substantially flat, that comprises a top front wheel support device (12) and a top rear wheel support device (13), that are discontinuous one from the other and intended to receive the wheels (14) of a motor vehicle (4) in a transportation position upon the top support structure (2), and that delimits a free central space (8) as large as possible;
the bottom support structure (3) being a substantially flat structure comprising a bottom wheel support assembly (35) intended to receive the wheels (14) of a motor vehicle (4) in a transportation position upon the bottom support structure (3); and
pallet (1) **characterized:**
- **in that** in a lower position, the top support structure (2) is nested within the bottom support structure (3), top front (12) and top rear (13) wheel support devices being inserted onto or in alignment with the bottom wheel support assembly (35) of the bottom support structure (3) and thus forming, together with said bottom wheel support assembly (35), all or part of a lower rolling path (35b) which allows for the loading onto the top support structure (2) of a motor vehicle (4) up to a transportation position, via the own movement thereof and without an access ramp.

2. Pallet (1) according to claim 1, **characterized in that** the bottom support structure (3) is a partially open frame comprising, besides the bottom wheel support assembly (35):
- two outer longitudinal members (30) and two inner longitudinal members (31); and
- a set of cross-members wherein at least one front end cross-member (32) and one rear end cross-member (33) that join said outer longitudinal members (30) and said inner longitudinal members (31).

3. Pallet (1) according to any of the preceding claims, **characterized in that** it also comprises retaining means (24) that block the front sliding members (19) and rear sliding members (20), when the upper position of the top support structure (2) is reached, these retaining means (24) being capable of blocking the front sliding members (19) and rear sliding members (20), at different heights along the main posts (6) and secondary posts (7) respectively, in order to adjust the altitude of the upper position of the top support structure (2).

4. Pallet (1) according to any one of the preceding claims, **characterized in that**, in the lying position, the main posts (6) extend transversely with respect to the general direction of the pallet (1).

5. Pallet (1) according to any one of the preceding claims, **characterized in that**, in the erected position, the main posts (6) are inclined laterally outward or else are substantially vertical.

6. Pallet (1) according to any one of the preceding claims, **characterized in that** the secondary posts (7) are articulately secured by the lower end (42) thereof to the front of the bottom support structure (3), and can pass by pivoting from the lying position to the erected position.

7. Pallet (1) according to any one of the preceding claims, **characterized in that** in the erected position, the secondary posts (7) are inclined towards the rear of the pallet (1).

8. Pallet (1) according to claims 6 and 7, **characterized in that** the secondary posts (7) are attached to the top support structure (2) in such a way as to automatically erect when the front of the top support structure (2) is raised, the inclination thereof in the erected position depending upon the height to which the front of the top support structure (2) is raised.

9. Pallet (1) according to any one of the preceding claims, **characterized in that** the bottom wheel support assembly (35) is a set of four individual structures each intended to receive one of the wheels (14) of the transported motor vehicle (4), or a set of two transverse structures intended to receive for one the two front wheels and for the other the two rear wheels of the transported motor vehicle (4), or a set of two longitudinal structures intended to receive for one the two left wheels and for the other the two right wheels of the transported motor vehicle (4).

10. Pallet (1) according to any one of the preceding claims, **characterized in that** said bottom wheel support assembly (35) also comprises removable or folding or retractable extensions (38), which, in the folded out position, constitute an extension to the lower rolling path (35b).

11. Pallet (1) according to any one of the preceding claims, **characterized in that** the top front wheel support device (12) or the top rear wheel support device (13) is a set of two individual structures each intended to receive one of the two front or rear wheels of the transported motor vehicle (4), or a transverse structure intended to receive the two front wheels or the two rear wheels of the transported motor vehicle (4).

12. Pallet (1) according to any one of the preceding claims, **characterized in that** the top front wheel support device (12) or the top rear wheel support device (13) is movable longitudinally with respect to the general direction of the pallet.

13. Pallet (1) according to any one of the preceding claims, **characterized in that** it comprises receiving means (53) capable of co-operating with the forks (28) of a forklift truck (29), which are located at the front and the rear of the top support structure (2), and on the sides of the bottom support structure (3).

14. Pallet (1) according to any one of the preceding claims, **characterized in that** the bottom support structure (3) comprises, on the underside thereof, rolls, rollers (48a), sliding parts, ski-shaped longitudinal members, stands, or deployable roll or roller feet (48) beneath the bottom support structure (3).

15. Pallet (1) according to any one of the preceding claims, **characterized in that** it also comprises a least one longitudinal, abutment member (50) or an anchor member.

16. Pallet (1) according to any one of the preceding claims, **characterized in that**, when it is fully collapsed, it can be stacked upon other identical pallets (1) and **in that** it comprises protruding centering elements (57, 55) allowing for the automatic centering of an identical stacked pallet (1) thereabove.

17. Loading method for loading one or two motor vehicles (4) inside a container (49) or onto an airplane pallet (49a) by means of a pallet (1) according to claim 1, said method comprising the following steps:
- placing the pallet (1) on the ground, the top support structure (2) being nested into the bottom support structure (3);
- loading a vehicle (4) onto the top support structure (2) in making it roll over the rolling path (35b) until the wheels (14) thereof are arranged on the top front wheel support device (12) and the top rear wheel support device (13) of the top support structure (2);
- immobilizing the wheels (14) of said vehicle (4) on the corresponding front (12) and rear (13) top wheel support devices;
- pushing the loaded pallet (1) using a forklift truck (29) until it is inside the container (49) or onto the airplane pallet (49a).

18. Loading method according to claim 17, **characterized in that** it also comprises the following step:
- placing the two main posts (6) in the erected position;
this step being performed before or after loading the vehicle (4) onto the top support structure (2).

19. Loading method according to claim 17 or 18, **characterized in that**, before the step consisting of pushing the loaded pallet (1) using a forklift truck (29) until it is inside the container (49) or onto the airplane pallet (49a), it also comprises the following steps:
- raising the rear of the top support structure (2) using the forks (28) of a forklift truck (29), by sliding the rear sliding members (20) along the main posts (6);
- locking the rear of the top support structure (2) in the upper position;
- raising the front of the top support structure (2) using the forks (28) of a forklift truck (29), by sliding the front sliding members (19) along the secondary posts (7) thus causing the pivoting of said articulated secondary posts (7) that automatically erect during the raising of the front of the top support structure (2) and pass from a lying position to an erected position;
- locking the front of the top support structure (2) in the upper position;
- loading a second vehicle (4) onto the bottom support structure (3), in making it roll over the bottom support structure (3) until the wheels thereof are arranged on the bottom wheel support assembly (35);
- immobilizing the wheels (14) of the second vehicle (4) on the bottom wheel support assembly (35).
